(19) Europäisches Patentamt

European Patent Office

Office européen des brevets

(11) **EP 1 169 588 B1**

(12) **EUROPÄISCHE PATENTSCHRIFT**

(45) Veröffentlichungstag und Bekanntmachung des Hinweises auf die Patenterteilung:
**03.03.2004 Patentblatt 2004/10**

(21) Anmeldenummer: **00925234.7**

(22) Anmeldetag: **20.04.2000**

(51) Int Cl.⁷: **F16K 1/22**

(86) Internationale Anmeldenummer:
**PCT/EP2000/003645**

(87) Internationale Veröffentlichungsnummer:
**WO 2000/065261 (02.11.2000 Gazette 2000/44)**

(54) **VORRICHTUNG ZUR STEUERUNG STRÖMENDER MEDIEN**

DEVICE FOR CONTROLLING FLOWING MEDIA

DISPOSITIF DE REGULATION DE SUBSTANCES EN ECOULEMENT

(84) Benannte Vertragsstaaten:
**AT BE CH CY DE DK ES FI FR GB GR IE IT LI LU MC NL PT SE**
Benannte Erstreckungsstaaten:
**RO SI**

(30) Priorität: **21.04.1999 DE 19918128**

(43) Veröffentlichungstag der Anmeldung:
**09.01.2002 Patentblatt 2002/02**

(73) Patentinhaber: **Möllmann, Dieter**
**27793 Wildeshausen (DE)**

(72) Erfinder: **Möllmann, Dieter**
**27793 Wildeshausen (DE)**

(74) Vertreter: **Heiland, Karsten, Dipl.-Ing. et al**
**Meissner, Bolte & Partner**
**Anwaltssozietät GbR**
**Hollerallee 73**
**28209 Bremen (DE)**

(56) Entgegenhaltungen:
**EP-A- 0 029 110         EP-A- 0 780 608**
**GB-A- 1 536 837         US-A- 3 945 398**

**Beschreibung**

Die Erfindung betrifft eine Absperrklappe für Druckräume, insbesondere für Behälter oder Rohrleitungen, mit einer relativ zu einer Drehachse in einem Gehäuse schwenkbaren Klappenscheibe, die in Dichtstellung den Durchfluss durch das Gehäuse in zwei einander entgegengesetzte Strömungsrichtungen im Bereich einer Dichtung verschließt, wobei die Klappenscheibe exzentrisch, d.h. mit einer Drehachse außerhalb einer Dichtungsmittellinie angeordnet ist, und wobei die Drehachse insbesondere durch eine Hauptachse der Absperrklappe geht.

In strömende Medien führenden Rohrleitungen wird die Strömung durch Ventile, Schieber oder Klappen unterbrochen. Klappen werden aufgrund der deutlich geringeren Baulänge bevorzugt.

Die einfachste Ausführung einer Klappe weist eine mittig entlang der Klappenscheibe verlaufende Drehachse auf. Bekannt ist auch eine exzentrische Bauform, bei der die Drehachse mit Abstand zur Klappenscheibe verläuft. Dadurch wird in der Regel die Dichtfunktion der Klappenscheibe verbessert, weil die Dichtung der Scheibe nicht von der aus dem Inneren des Gehäuses herausgeführten Drehwelle unterbrochen wird. Letztere sitzt vielmehr vor oder hinter der Klappenscheibe. Im übrigen ist die Drehachse bzw. Drehwelle mittig vor der Klappenscheibe angeordnet und schneidet eine Hauptachse der Absperrklappe, damit in der Regel auch die Hauptachse der Rohrleitung.

Schließlich sind sogenannte doppelt exzentrische Klappen bekannt. Die Drehachse bzw. Drehwelle ist bei diesem Typ zusätzlich zu der beschriebenen Exzentrizität außerhalb der Hauptachse, d. h. mit einem geringen Abstand zu dieser, angeordnet. Ermöglicht wird so ein Selbstschließeffekt bzw. ein Zwangsschließen für eine Strömungsrichtung. Bezüglich der anderen Strömungsrichtung ergibt sich nachteiligerweise ein permanenter Öffnungsdruck, so daß eine ebenfalls permanente und hohe Schließkraft mit entsprechend hohem Antriebsmoment aufgebracht werden muß. Auf Dauer entstehen insbesondere bei höheren Leitungsdrücken Leckstellen, die ein gefahrloses Arbeiten auf der abgesperrten Seite der Rohrleitung unmöglich machen.

Vor diesem Hintergrund ist es Aufgabe der vorliegenden Erfindung, eine Absperrklappe mit verbesserter Dichtwirkung zu schaffen. Eine weitere Aufgabe besteht darin, mit geringeren Antriebsmomenten auszukommen.

Erfindungsgemäß wird die Aufgabe durch die Merkmale des Patentanspruchs 1 gelöst.

In Fortbildung der Erfindung ist vorgesehen, dass die Klappenscheibe in beide Strömungsrichtungen selbstschließend ist. D.h., dass das letzte Stück der Schließbewegung durch den resultierenden, auf die Klappenscheibe wirkenden Arbeitsdruck unterstützt wird, unabhängig von der Strömungsrichtung. Im einfachsten Fall wird dies ermöglicht durch eine zentrisch gelagerte Klappenscheibe, die in Schließstellung in beiden Strömungsrichtungen unterschiedlich große Flächen seitlich neben der Drehachse aufweist, wobei die jeweils größeren Flächen einander über die Drehachse diagonal gegenüberliegen, ebenso die kleineren Flächen. Ermöglicht wird diese scheinbar unmögliche Anordnung durch eine bestimmte Dicke der Klappenscheibe und eine in seitlichen Bereichen - mit dem größten Abstand zur Drehachse-abgeschrägte umlaufende Dichtungsfläche. Seitlich weist die Dichtung dann eine räumliche Tiefe in Richtung der Hauptachse und in Richtung des Durchmessers auf. Gerade die Tiefe in Richtung des Durchmessers ermöglicht es, unterschiedliche Flächenverhältnisse für beide Strömungsrichtungen zu schaffen. Die einer Strömung entgegenstehende Seite einer Klappenscheibe ist durch die Drehachse unterteilt in eine linke und eine rechte Fläche. Für die Erzeugung der Schließkraft relevant ist die Differenz der Flächen. Bei einem Blick auf die Klappenscheibe entsprechend der Strömungsrichtung und einer rechtsdrehend schließenden Klappenscheibe ergibt sich ein Zwangsschließeffekt dann, wenn die linke Fläche größer ist als die rechte Fläche. Die selbe Bedingung ist auf der anderen Seite der Klappenscheibe für die andere Strömungsrichtung einzuhalten. Möglich ist dies durch die seitlich schräggerichtete Dichtungsfläche, so daß die sogenannte linke Klappenfläche auf der einen Seite größer ist als die (hierzu gegenüberliegende) rechte Klappenfläche auf der anderen Seite.

Vorzugsweise sind ringartige Dichtungselemente insbesondere am Umfang der Klappenscheibe angeordnet, die beim Schließen der Klappenscheibe an die umlaufende Dichtungsfläche angepreßt werden. Dabei wird eine Ringspannung aufgebaut, so daß der Druck gleichmäßig am Umfang verteilt ist und ringsum eine hohe Dichtwirkung besteht.

Die beschriebene Schrägung der Dichtungsfläche kann an den seitlich einander gegenüberliegenden Rändern oder insgesamt umlaufend unterschiedlich stark ausgebildet sein, so daß sich ein sogenannter Sitzkonus bzw. Kegel ergibt. Auch kann die Klappenscheibe exzentrisch ausgeführt sein, d. h. mit einer Drehachse außerhalb der Klappenscheibe bzw. einer zugehörigen Dichtungsmittellinie. Auch bei dieser Ausführung ist grundsätzlich ein Zwangsschließen in beiden Strömungsrichtungen möglich.

Vorteilhafterweise ist die Drehachse auf der Hauptachse angeordnet bzw. schneidet diese. Die Konstruktion der Absperrklappe ist dadurch einfacher. Die auftretenden Kräfte und Momente sind nahezu symmetrisch.

Bei Verwendung oder Anordnung eines Sitzkonus ist ein großer Sitzkonuswinkel zur Verringerung der Reibungskräfte beim Schließen vorteilhaft. Der Sitzkonus wird definiert durch die Lage der Sitzkonusachse bzw. Kegelachse und die Position der Kegelspitze. Der Sitzkonus muß so gewählt oder berechnet werden, daß ein Klemmen der Klappenscheibe im Dichtungsbereich unmöglich ist. Eine besonders vorteilhafte Ausführung der Erfindung betrifft eine Absperrklappe mit einem Sitzkonus, wobei dieser eine nach bestimmten Kriterien ermittelte geometrische Form aufweist, siehe insbesondere Patentansprüche 1-9.

Die im Anspruch 1 definierte Lage der umlaufenden Dichtfläche kann mit anderen Worten wie folgt wiedergegeben werden:

a. Die umlaufende Dichtfläche ist Teil eines Kegelmantels, dessen Mantellinien die Winkel der Dichtfläche relativ zur Hauptachse der Absperrklappe definieren,

b. die Mantellinien schneiden einander im Bereich einer Kegelspitze, deren Lage wie folgt bestimmbar ist:

b1. die Dichtungsmittellinie schneidet die Hauptachse senkrecht zu dieser,

b2. die Drehachse der Klappenscheibe ist mit Abstand (exzentrisch) zur Dichtungsmittellinie angeordnet, insbesondere auf der Hauptachse, und verläuft quer zur Dichtungsmittellinie und zur Hauptachse,

b3. mit der Drehachse als Mittelpunkt wird ein Dichtkreis festgelegt, dessen Durchmesser kleiner ist als die Nennweite der Rohrleitung oder des zur Verfügung stehenden Innendurchmessers innerhalb der Absperrklappe,

b4. Schnittpunkte des Dichtkreises mit der Dichtungsmittellinie werden als A und C bezeichnet, der Schnittpunkt des Dichtkreises mit einer Geraden durch A und dem Mittelpunkt wird als B bezeichnet, wobei B dem Punkt A über den Mittelpunkt gegenüberliegt,

b5. ein Klappenradius ergibt sich als halber Abstand von A zu C,

b6. eine Parallele zur Hauptachse weist zu dieser einen Abstand entsprechend dem dreifachen Klappenradius auf, wobei die Parallele - ebenso wie die Punkte B und C - dem Punkt A über die Hauptachse gegenüberliegt,

b7. eine Tangente am Dichtkreis durch den Punkt B schneidet die Parallele zur Hauptachse in einem Punkt, der die Kegelspitze definiert.

Sinnvollerweise wird dabei davon ausgegangen, dass Kegelspitze und Drehpunkt auf verschiedenen Seiten der Dichtungsmittellinie liegen. Auch ergibt sich die Schließrichtung der Klappenscheibe derart, dass letztere in ihrer geöffneten Stellung der Kegelspitze über die Hauptachse gegenüberliegt.

Wie in den ersten Absätzen der Beschreibung ausgeführt, sind exzentrische oder doppelt exzentrische Bauformen bekannt. Eine Absperrklappe mit den erfindungsgemäßen Merkmalen ermöglicht die Konstruktion einer exzentrischen Bauform, bei der die Drehachse insbesondere die Hauptachse schneidet und eine Betätigung der Klappenscheibe in beiden Drehrichtungen und bei beiden Strömungsrichtungen mit wesentlich geringeren Antriebsmomenten möglich ist als bei allen bislang bekannten Absperrklappen. Dies gilt auch für Konstruktionen, bei denen eine an der Klappenscheibe umlaufende Dichtung, etwa ein umlaufender Federring, in Strömungsrichtung nahezu beliebig dünn ist. Eine derartige Klappenscheibe ist zwar nicht mehr selbstschließend. Vielmehr kann ein geringes Haltemoment für die Einhaltung der geschlossenen Position der Klappenscheibe erforderlich sein. Das Antriebsmoment zum Öffnen der Klappenscheibe ist jedoch ebenfalls deutlich geringer als bei den bekannten Absperrklappen. Der Antrieb der Klappenscheibe kann wesentlich kleiner dimensioniert werden als bisher. Dies ist gerade für schnell schließende und öffnende Klappen ein großer Vorteil.

Mit ein Grund für das leichte Öffnen der Absperrklappe ist die Verwendung eines schwimmenden Federrings als umlaufende Dichtung an der Klappenscheibe. Dieser kommt innen am Kegelsitz der umlaufenden Dichtfläche im Klappengehäuse zu liegen. Je mehr der Federring in den Konussitz des Kegelmantels eingepresst wird, etwa durch eine Druckdifferenz auf beiden Seiten der Klappenscheibe oder durch ein Antriebsmoment, um so größer wird eine durch die Stauchung des Federrings bedingte Gegenkraft (Kraftkompensation) bzw. ein Gegenmoment, das mit verantwortlich ist für das leichte Öffnen der Klappenscheibe. Die Winkel des Kegelmantels sind so gewählt, dass Klemmfreiheit besteht bzw. keine Selbsthemmung vorliegt.

Schließlich betrifft die Erfindung auch unterschiedliche Verfahren zur Herstellung von Absperrklappen. Genauer geht es um die Bearbeitung der Dichtflächen an der Klappenscheibe und am Gehäuse. In der Praxis besteht die Dichtung aus einer umlaufenden Dichtfläche an der Klappenscheibe oder am Gehäuse und korrespondierenden Dichtungselementen am jeweils anderen Teil. Beispielsweise kann eine Packung aus Dichtringen oder Lamellendichtungen vorgesehen sein. Die Dichtelemente werden analog zur Dichtfläche bearbeitet. Vorzugsweise ist die Klappenscheibe mit den Dichtelementen versehen.

Weitere Merkmale der Erfindung ergeben sich aus den Ansprüchen und der Beschreibung im übrigen.

Ausführungsbeispiele der Erfindung werden nachfolgend anhand von Zeichnungen näher beschrieben. Es zeigen:

Fig. 1    einen Schnitt durch eine zentrische Absperrklappe,

Fig. 2    einen Schnitt durch eine exzentrische Absperrklappe unter Angabe einer bestimmten Strömungsrichtung,

Fig. 3    die Absperrklappe gemäß Fig. 2 mit entgegengesetzter Strömungsrichtung,

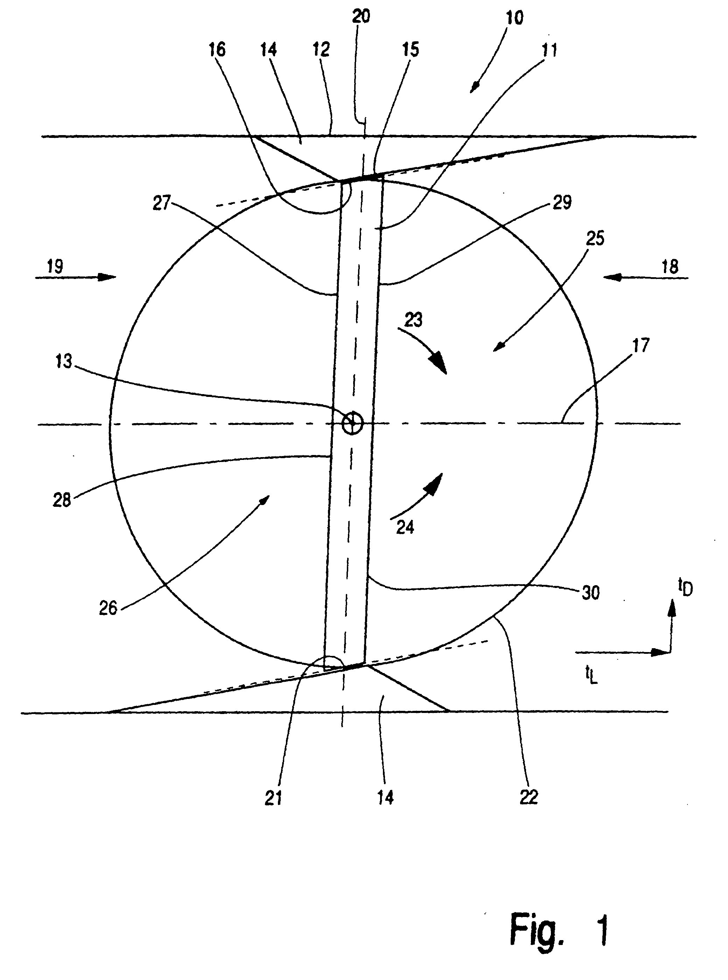

Fig. 4
bis 6     eine Absperrklappe aus drei verschiedenen Ansichten, nämlich aus einer Draufsicht in einer Strömungsrichtung, in einem Vertikalschnitt, und in einem Horizontalschnitt, letzteres ähnlich den Fig. 1 bis 3,

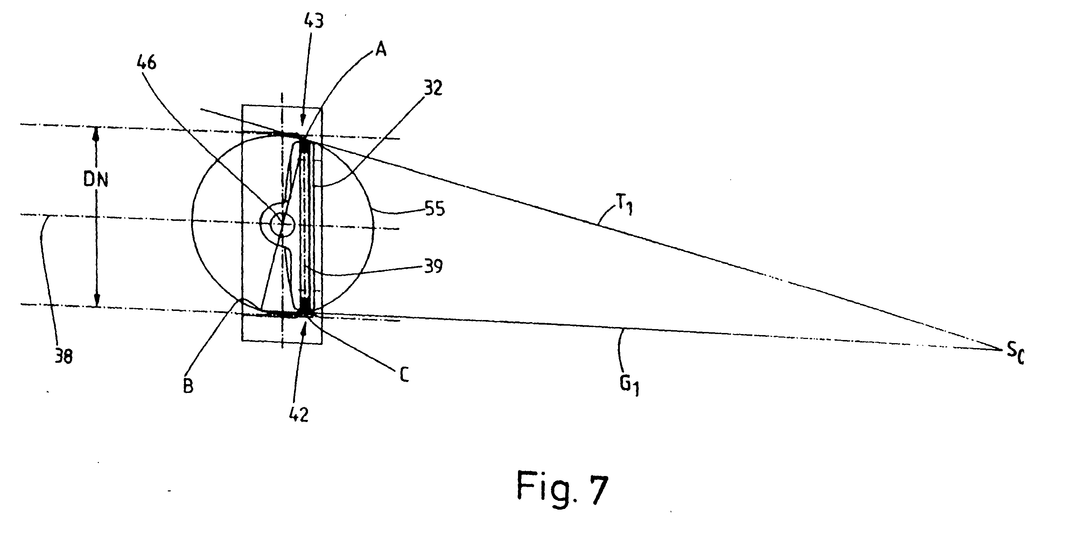

Fig. 7    eine Absperrklappe im Horizontalschnitt mit Hilfslinien zur Bestimmung eines Sitzkonus bzw. der Dichtungsgeometrie,

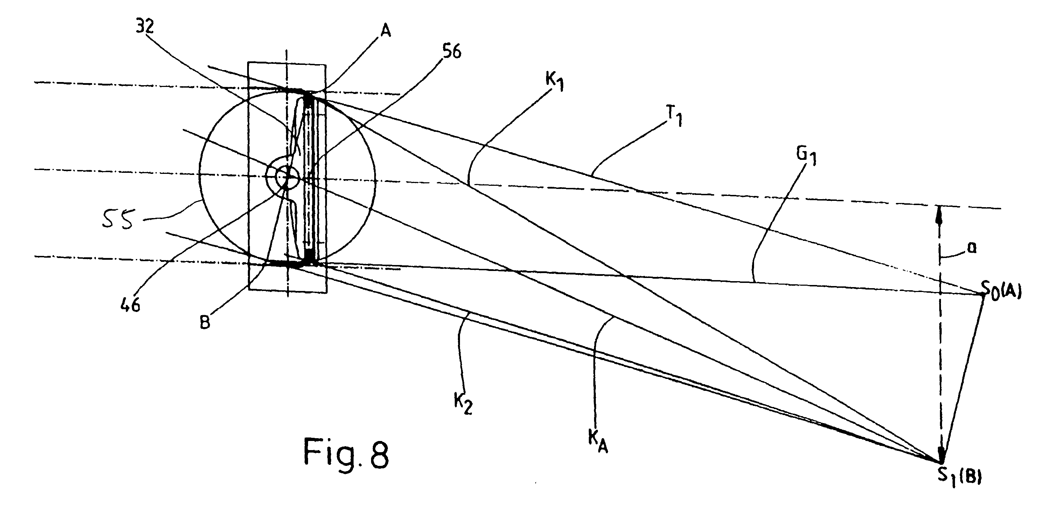

Fig. 8    eine Darstellung entsprechend Fig. 7 mit weiteren Hilfslinien,

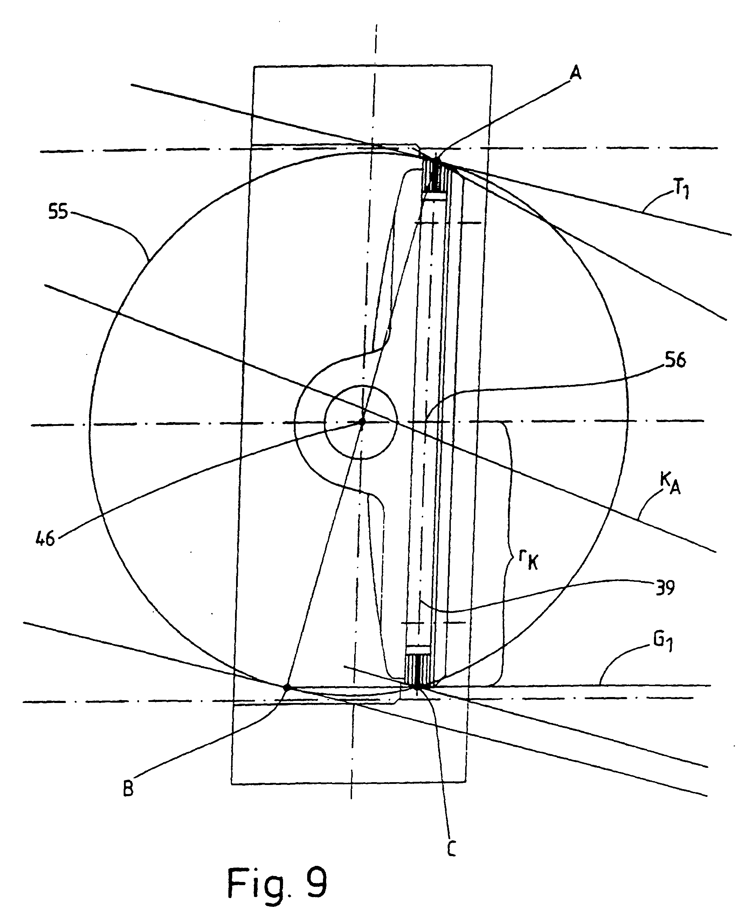

Fig. 9    eine Ausschnittvergrößerung aus Fig. 8,

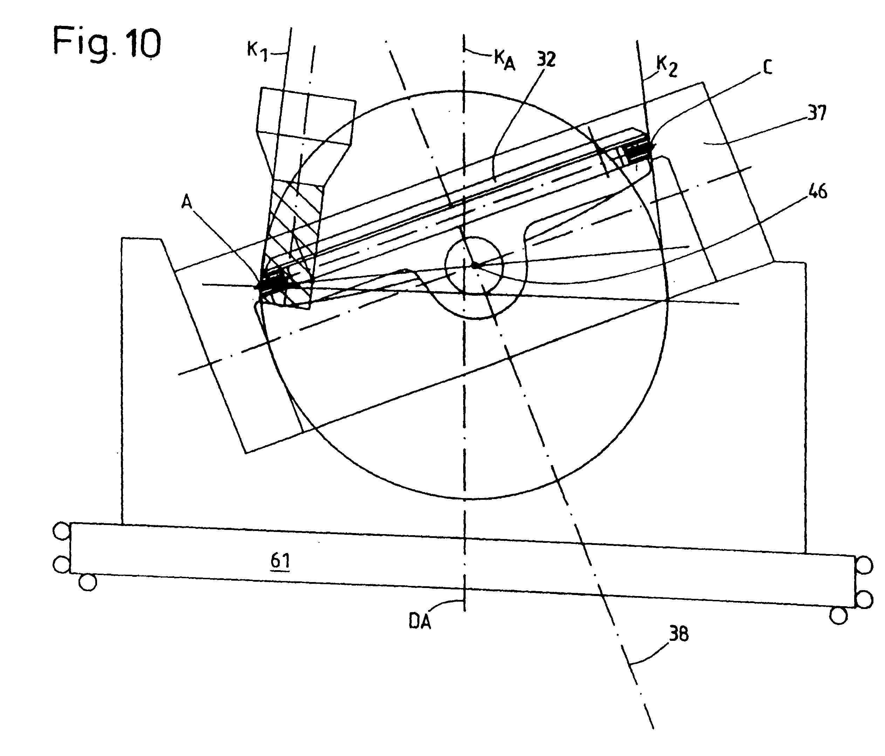

Fig. 10   eine funktionelle Zusammenstellung, nämlich eine Absperrklappe im Horizontalschnitt mit Drehtisch einer CNC-Maschine,

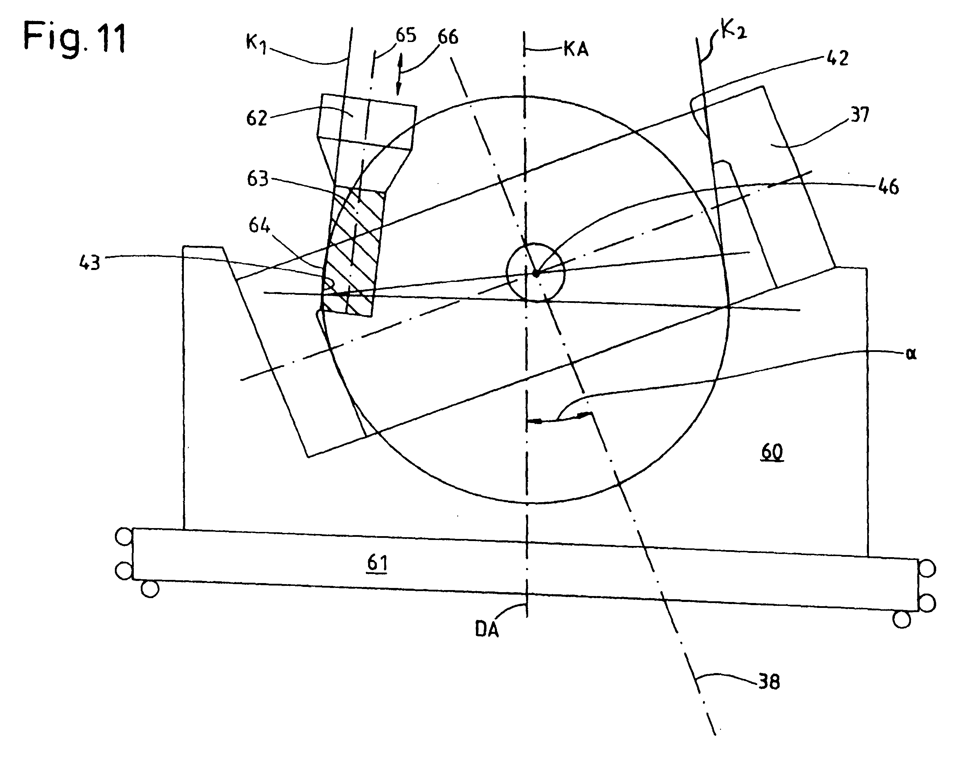

Fig. 11   ein Gehäuse der Absperrklappe gemäß Fig. 10, eingespannt auf dem Drehtisch,

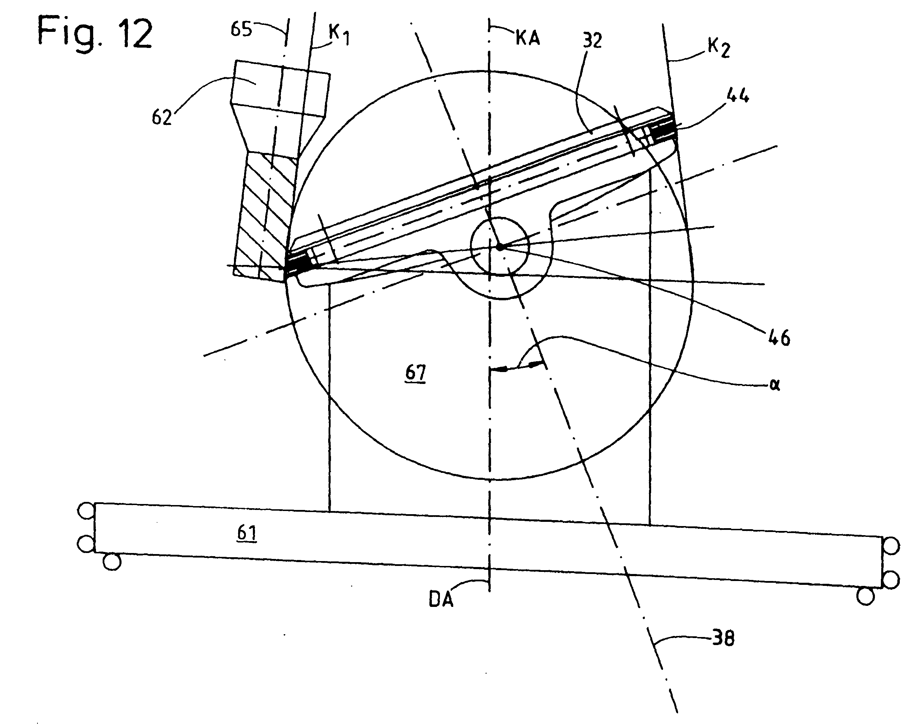

Fig. 12   eine Klappenscheibe entsprechend Fig. 10, eingespannt auf dem Drehtisch,

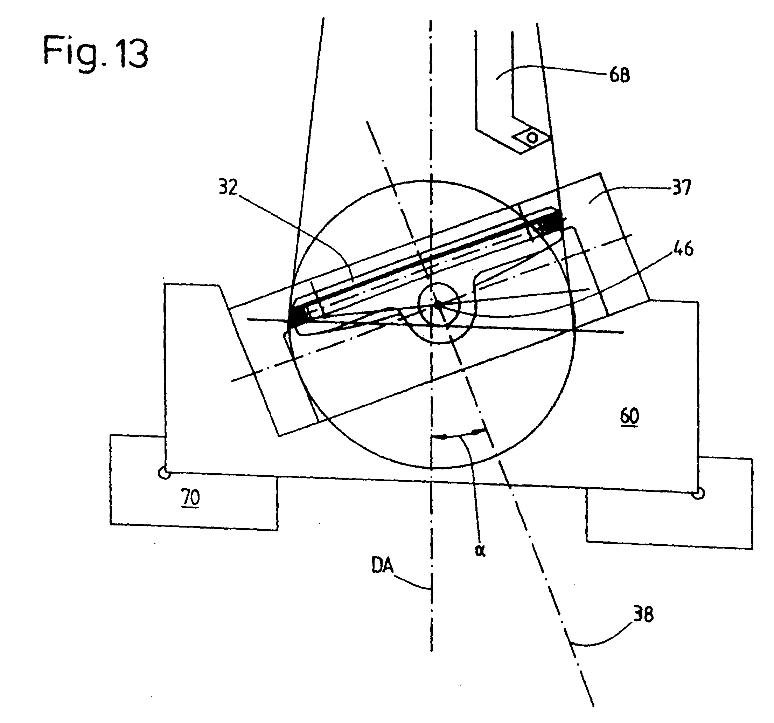

Fig. 13   eine Darstellung analog Fig. 10, jedoch für eine etwas andere Bearbeitung,

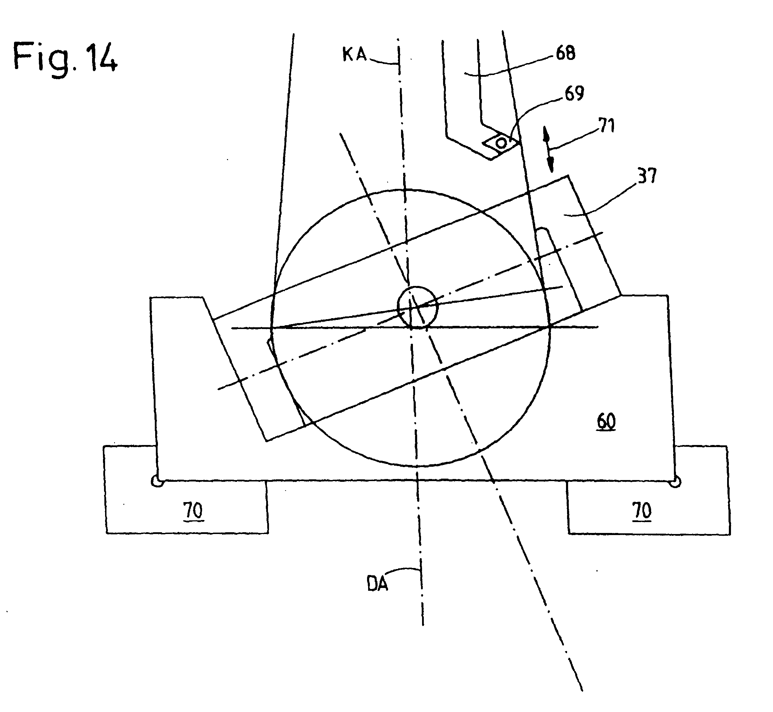

Fig. 14   eine Darstellung analog Fig. 11,

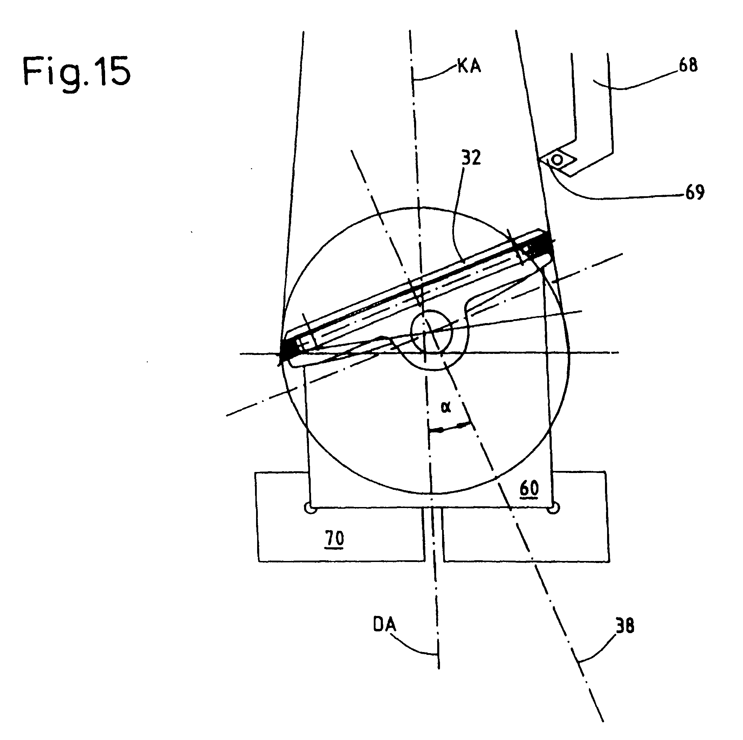

Fig. 15   eine Darstellung analog Fig. 12,

Fig. 16
bis 19    geometrische Erläuterungen zur Bestimmung der für die Konstruktion benötigten Maße,

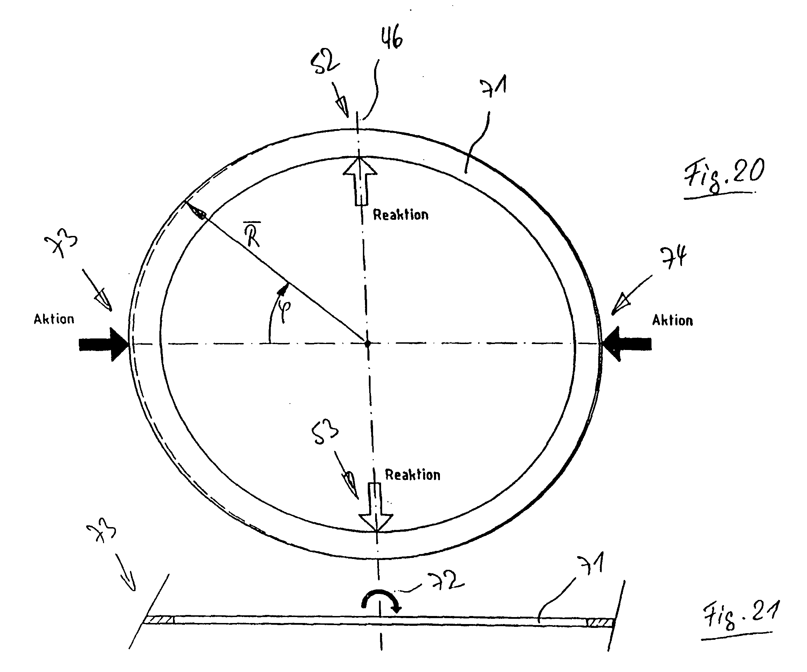

Fig. 20   eine Darstellung der beim Schließen der Absperrklappe auftretenden Kräfte im Bereich eines umlaufenden Dichtrings,

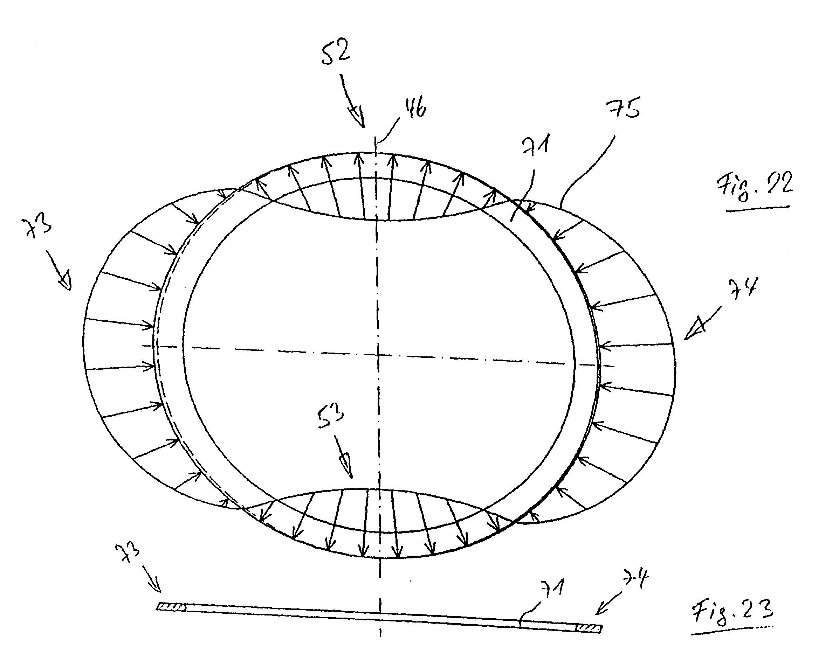

Fig. 21   der Dichtring im Querschnitt,

Fig. 22   eine weitere grafische Darstellung der auftretenden Kräfte entsprechend Fig. 20,

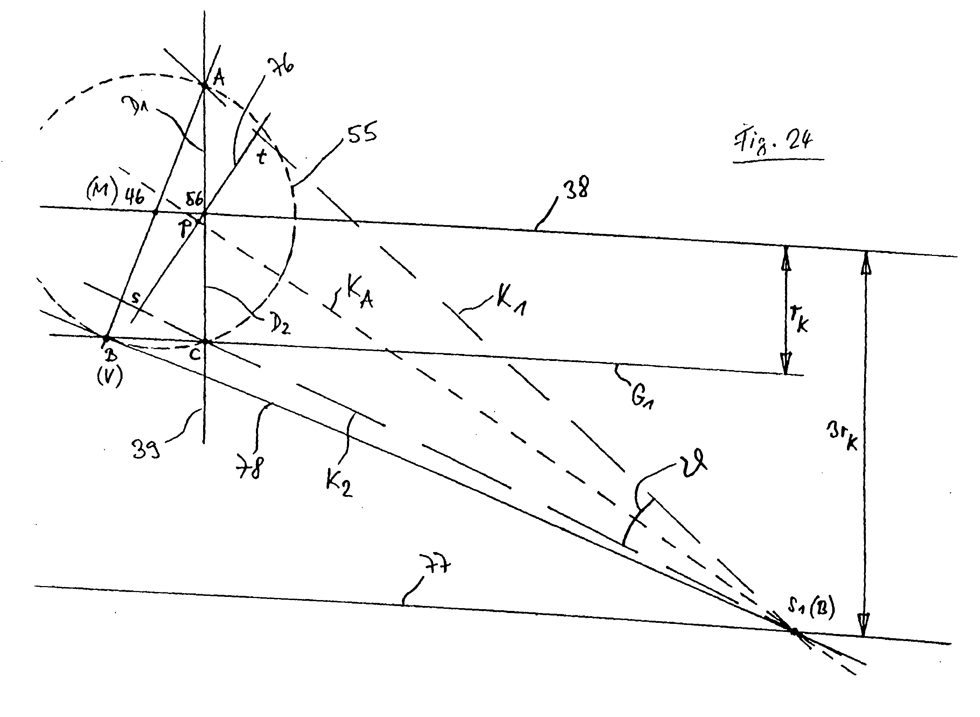

Fig. 23   entspricht Fig. 21,

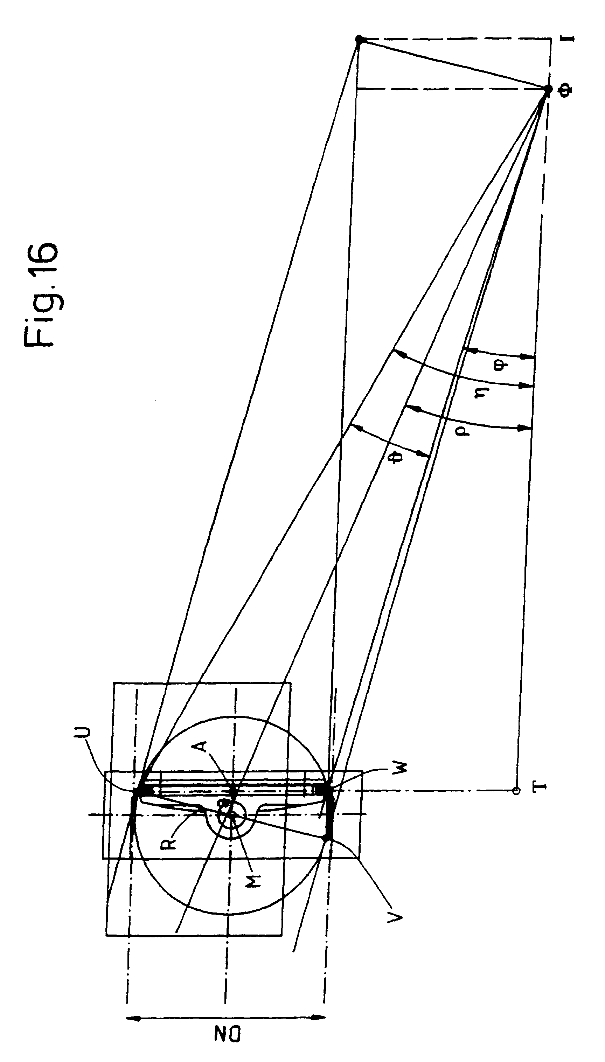

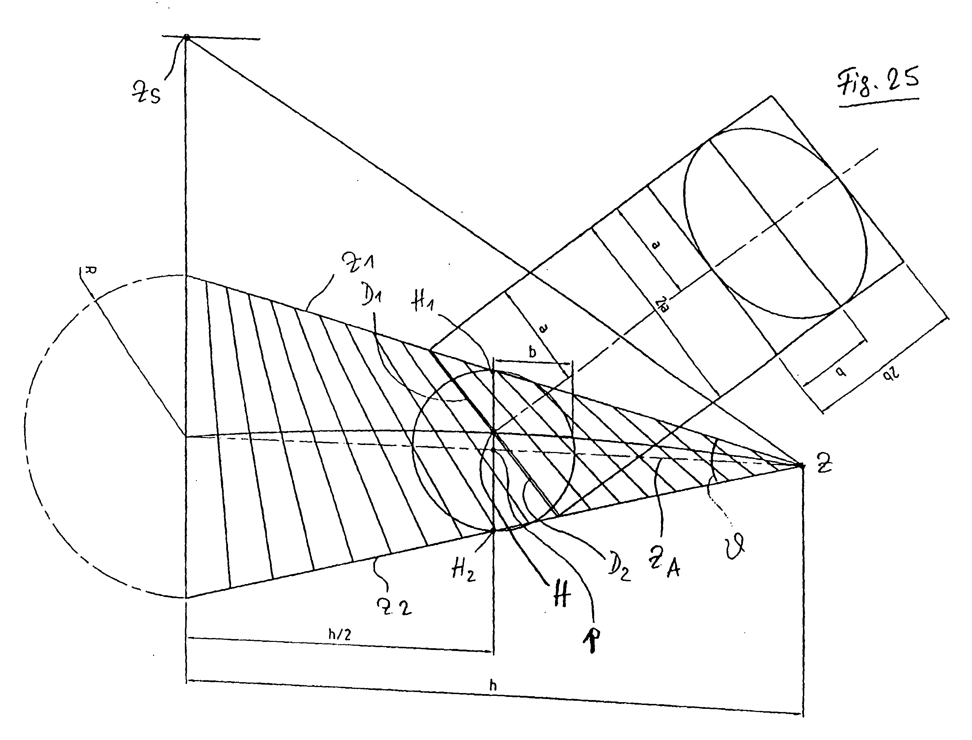

Fig. 24   eine Darstellung ähnlich den Fig. 8 und 16 zur Erläuterung einer weiteren Berechnungsmethode für die Kegelspitze S1 und die Ellipsenform des Dichtsitzes,

Fig. 25   eine Projektion zur weiteren Erläuterung der Ellipsenform,

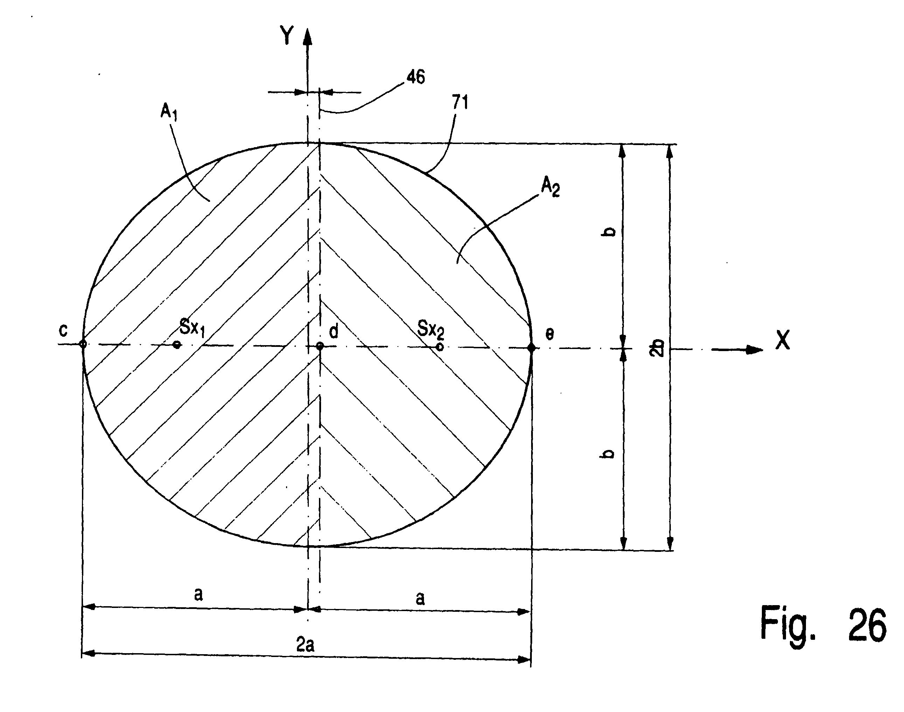

Fig. 26   eine Darstellung des Strömungsquerschnitts in der Absperrklappe zur Erläuterung der auftretenden Kräfte und Momente,

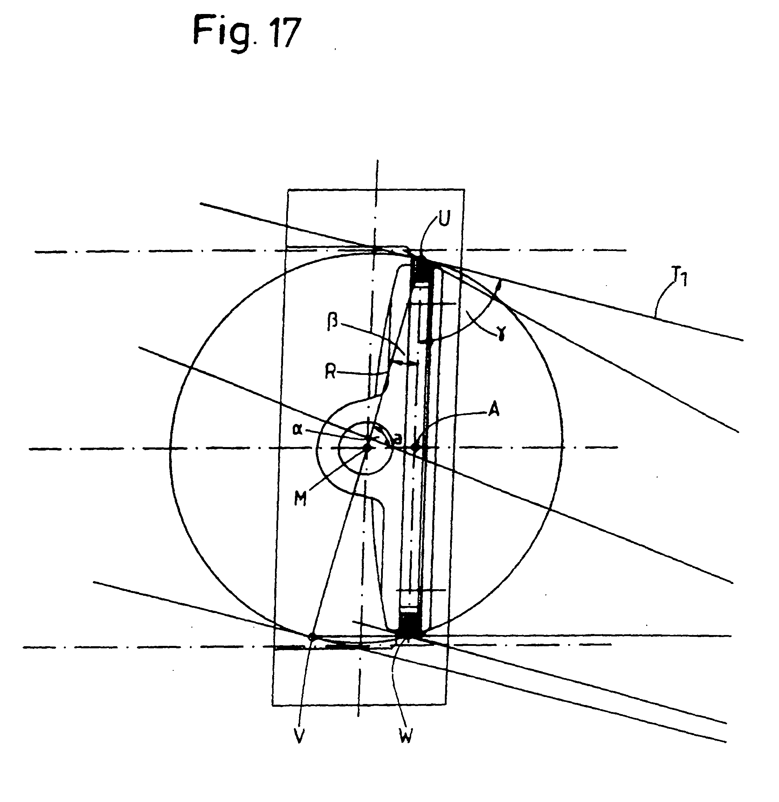

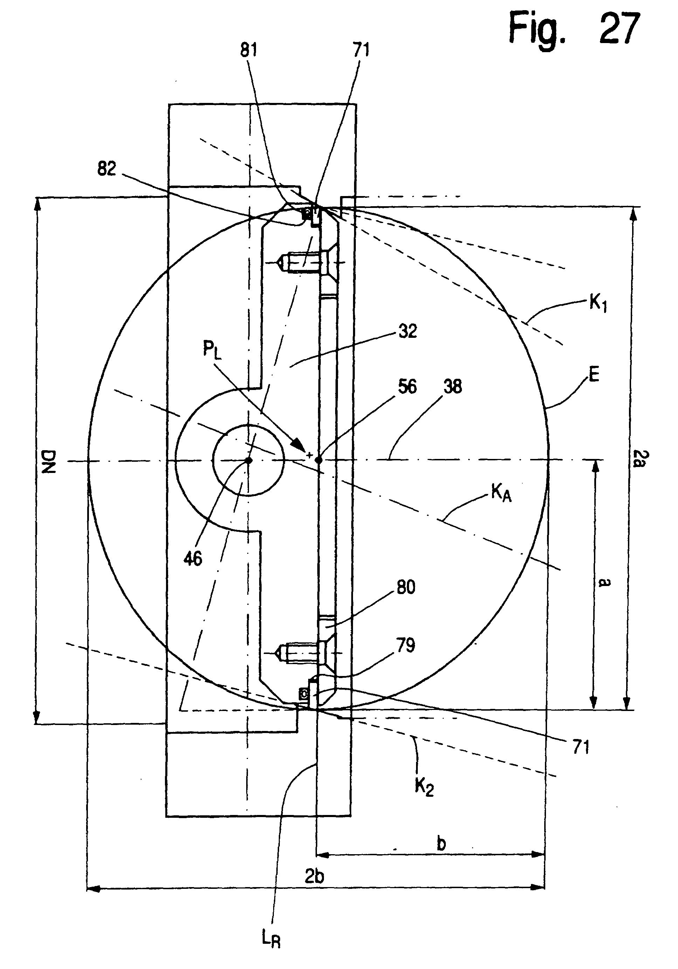

Fig. 27   eine Darstellung ähnlich den Fig. 9 und 17 zur weiteren Erläuterung der Ellipsenform.

Einige wichtige Grundbegriffe einer erfindungsgemäßen Absperrklappe 10 werden zunächst anhand der Fig. 1 erläutert. Eine Klappenscheibe 11 ist in einem Gehäuse 12 mit zentrischer Drehachse 13 angeordnet. Nicht gezeigt sind vor- und nachgeordnete Rohrleitungen.

Ein Dichtsitz im Gehäuse 12 ist mit der Ziffer 14 bezeichnet und weist eine umlaufende Dichtfläche 15 auf. Eine korrespondierende Dichtfläche im Bereich der Klappenscheibe 11 trägt die Bezugsziffer 16. In der Praxis können hier oder im Gehäuse auch mehrere Dichtungslamellen vorgesehen sein.

Eine Hauptachse 17 der Absperrklappe 10 erstreckt sich parallel zu den Strömungsrichtungen 18, 19 und geht im vorliegenden Fall durch die Drehachse 13. Genauer ergibt sich die Hauptachse 17 als Achse entlang den Strömungsrichtungen und durch einen Flächenschwerpunkt der Klappe 11. Auch ist die Hauptachse üblicherweise zugleich Rohrachse.

Die Dichtflächen 15, 16 sind gegenüber der Hauptachse 17 angewinkelt, so daß sich Abmessungen in Richtung der Hauptachse 17 ergeben (Tiefe TL in Richtung der Hauptachse und Tiefe TD in Richtung des Durchmessers). Die Schrägung der Dichtflächen 15, 16 ist dort am größten, wo auch der Abstand zur Drehachse 13 am größten ist. Am Durchgang der Drehachse 13 durch die Dichtflächen 15, 16 sind letztere parallel zur Hauptachse 17 ausgerichtet und weisen somit keine Schrägung auf. Aufgrund der Tiefe der Dichtflächen 15, 16 in Richtung der Hauptachse 17 läßt sich eine Dichtungsmittellinie 20 angeben. Deren Schnittpunkt 21 mit der Dichtfläche 16 beschreibt beim Schwenken der Klappenscheibe 17 einen Dichtkreis 22.

Im vorliegenden Fall ist die Klappenscheibe 11 zum Öffnen rechtsherum zu drehen, in Richtung des Pfeils 23 und zum Schließen linksherum, in Richtung des Pfeils 24.

Die Absperrklappe 10 ist so konstruiert, daß die Klappenscheibe 11 in beiden Strömungsrichtungen 18, 19 zwangsweise schließt. Bei Strömung in Richtung des Pfeils 18 wird eine rechte Scheibenseite 25 beaufschlagt, bei entgegengesetzter Strömung 19 eine linke Scheibenseite 26. Beide Seiten 25, 26 können unterteilt werden in einander gegenüberliegende Seitenflächen 27, 28 und 29, 30, wobei sich die Trennung durch die Lage der Hauptachse 17 ergibt. Unter der Annahme der Strömungsrichtung 18 ergibt sich eine Schließkraft durch die unterschiedlich großen Flächen 29 und 30. Die Seitenfläche 29 ist größer als die Seitenfläche 30 wegen der schräggerichteten Dichtfläche 16. Auf der gegenüberliegenden Seite 26 sind die Verhältnisse genau umgekehrt. Entsprechend ergibt sich bei umgekehrter Strömungsrichtung 19 auch hier eine Schließkraft aufgrund der unterschiedlich großen Flächen 27 und 28.

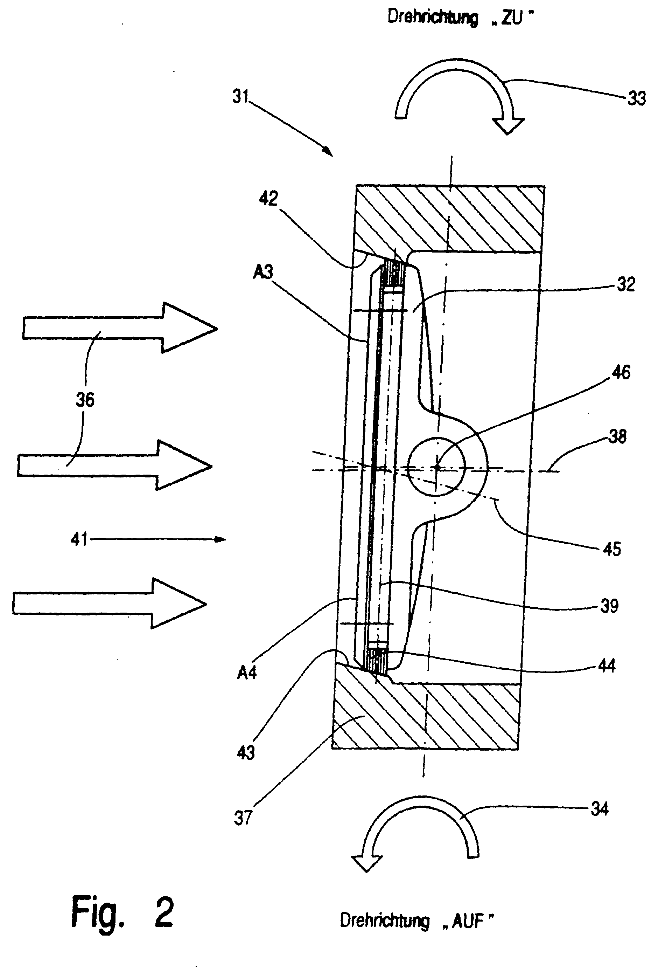

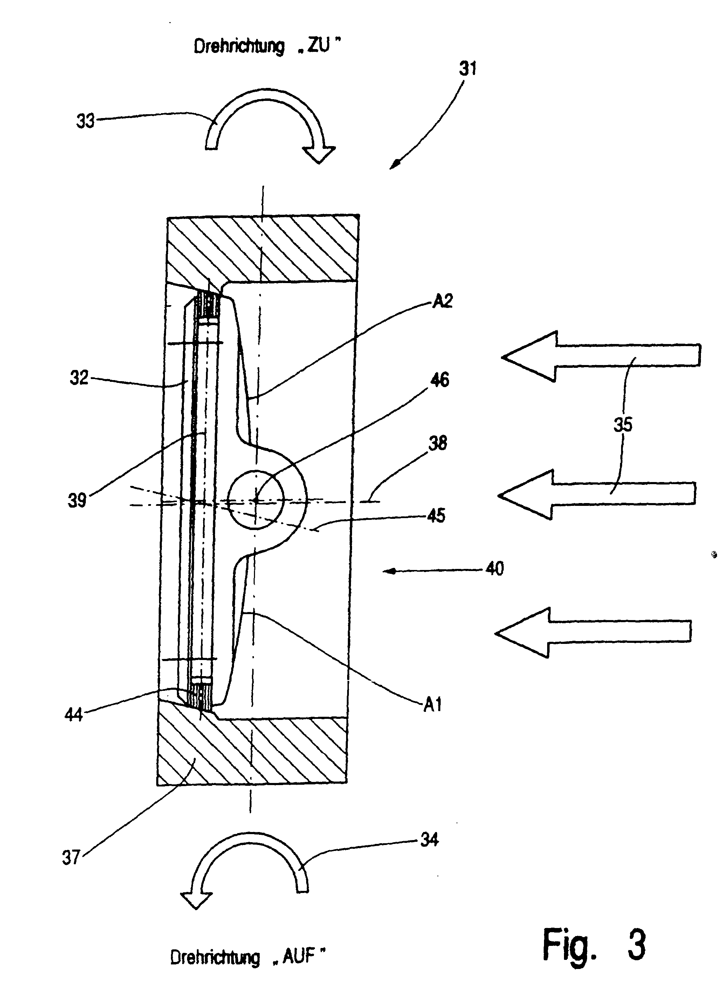

Die beschriebenen Zusammenhänge sind in den Figuren 2 und 3 anhand einer etwas anders gestalteten Absperrklappe 31 nochmals ersichtlich. Vertauscht sind hier gegenüber Fig. 1 die Drehrichtungen. So schließt die Klappenscheibe 32 bei einer Rechtsdrehung, Pfeil 33 und öffnet durch Linksdrehung, Pfeil 34. Die unterschiedlichen Strömungsrichtungen sind mit den Pfeilen 35 und 36 angegeben, das Gehäuse mit der Ziffer 37, die Hauptachse mit der Ziffer 38 und eine Dichtungsmittellinie mit der Ziffer 39. Unterschiedlich große Seitenflächen tragen die Bezeichnungen A1, A2 auf der rechten Seite 40 und A3, A4 auf der linken Seite 41. Ebenso wie in dem Ausführungsbeispiel der Fig. 1 ergeben sich auch hier Schließkräfte für beide Strömungsrichtungen.

Im Gegensatz zur Fig. 1 weist die Klappenscheibe 11 in den Figuren 2 und 3 einen sogenannten Konussitz auf mit konisch zueinander ausgerichteten Dichtflächen 42, 43 am Gehäuse 37 und entsprechend angeordneten Dichtungslamellen 44 am Umfang der Klappenscheibe 32. Gedachte Fortsetzungen der Dichtflächen 42, 43 in der Bildebene treffen sich in nicht gezeigter Weise links von der Klappenscheibe 32 und oberhalb der Hauptachse 38 und bilden so einen Kegel. In Umfangsrichtung ergibt sich eine umlaufende Dichtungsfläche DF als Teil eines Kegelmantels. Eine durch die Dichtungsmittellinie 39 und die Hauptachse 38 gehende schräggerichtete Linie 45 stellt die Kegelachse dar.

Im Gegensatz zu der Absperrklappe 10 ist die Absperrklappe 31 geringfügig (doppelt-) exzentrisch ausgebildet mit einem Drehpunkt 46 knapp neben der Hauptachse 38. Die Exzentrizität, nämlich der Abstand des Drehpunkts 46 von der Hauptachse 38 ist so klein gewählt, daß gleichwohl in beiden Strömungsrichtungen aufgrund der Flächenverteilungen Schließkräfte auftreten. Im vorliegenden Fall ist der Abstand kleiner als die Hälfte der Tiefe TD der Dichtfläche der Dichtungslamellen 44. Dabei ergibt sich TD in Richtung der Dichtungsmittellinie 39 quer zur Hauptachse 38, siehe auch Fig. 1.

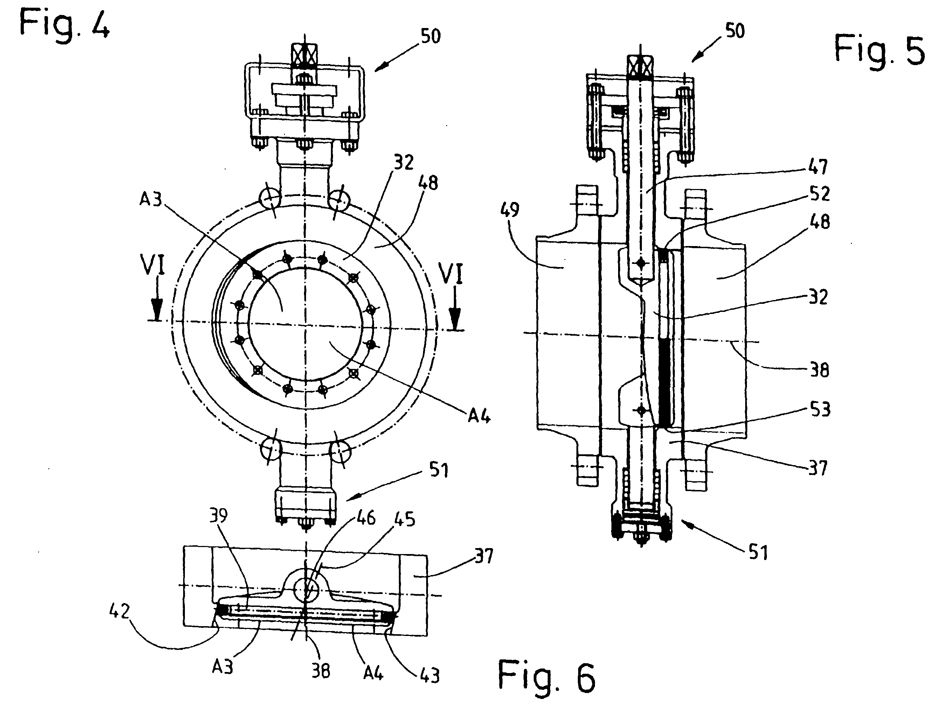

Die Figuren 4 bis 6 zeigen eine realitätsnahe Darstellung einer Absperrklappe in drei Ansichten. Es handelt sich wiederum um eine exzentrische Klappe mit dem selben Aufbau wie in den Figuren 2 und 3. Es sind deshalb die selben Bezugsziffern vorgesehen. Zusätzlich erkennbar sind eine Drehwelle 47, Rohrflansche 48, 49 und Lager 50, 51 für die Drehwelle 47. In Fig. 5 ist gut ersichtlich, daß die Dichtflächen bei aufrechter Drehwelle 47 in einem oberen Umfangsbereich 52 bzw. einem unteren Umfangsbereich 53 nur eine kleine Neigung gegenüber der Hauptachse 38 aufweisen. Der Übergang zwischen diesen Umfangsbereichen und den seitlichen Umfangsbereichen mit den Dichtflächen 42, 43 ist naturgemäß fließend. Tatsächlich weisen auch die Bereiche 52, 53 zueinander einen Winkel auf entsprechend dem anhand der Figuren 2 und 3 beschriebenen "Konussitz".

Anhand der Figuren 7 bis 9 wird nachfolgend die Konstruktion des "Konussitzes" und damit die Winkeligkeit der Dichtflächen 42, 43 bzw. der Umfangsbereiche 52, 53 näher erläutert. Dabei wird von der Konstruktion einer Absperrklappe gemäß den Figuren 4 bis 6 ausgegangen. Entsprechend werden gleiche Bezugsziffern verwendet.

Eine zu schließende Rohrleitung weist einen Nenndurchmesser DN auf. Die Klappenscheibe 32 ist naturgemäß etwas kleiner im Durchmesser. Im vorliegenden Fall ist diese - abweichend von den Figuren 4 bis 6 - zentrisch angeordnet (nur einfache Exzentrizität durch Anordnung der Drehachse außerhalb der Dichtungsmittellinie), mit dem Drehpunkt 46 durch die Hauptachse 38. Letztere ist hier zugleich auch Rohrachse. Der Dichtkreis 55 ergibt sich um den Drehpunkt 56 in Verbindung mit einem Schnittpunkt A aus Dichtungsmittellinie 39 und den zu konstruierenden Dichtflächen 42, 43. In diesem Stadium ist der Durchmesser im Bereich der Dichtflächen 42, 43 bekannt bzw. kann als Vorbedingung angenommen werden. Konstruiert werden muß lediglich die konische Ausrichtung der Dichtflächen.

Eine Gerade durch den Drehpunkt 46 und den Schnittpunkt A führt automatisch zu einem gegenüberliegenden Schnittpunkt B. Dem Schnittpunkt A gegenüberliegend entlang der Dichtungsmittellinie 39 und am Dichtkreis 55 ergibt sich ein Schnittpunkt C.

Anhand der Punkte A, B, C werden Hilfslinien konstruiert, nämlich eine Tangente T1 am Dichtkreis 55 durch den Punkt A und eine Gerade G1 durch die Punkte B und C. Die Geraden T1 und G1 schneiden einander im Punkt S0.

Durch Verschiebung der Strecke A - B entlang der Tangente T1 kommt der Punkt A auf dem Punkt S0 zu liegen, während der Punkt B einen neuen Punkt S1 definiert. Ausgehend von diesem Punkt S1 werden Kegellinien K1 und K2 gezogen durch die Punkte A und C. Die Kegellinien K1, K2 beschreiben den Umfang eines Kegels (Mantellinien), der zugleich den Konussitz in der Absperrklappe 31 bzw. die Winkel der Dichtflächen 42, 43 und der zugehörigen Dichtungselemente an der Klappenscheibe 32 definiert.

Im Ergebnis weist der Punkt S1 von der Hauptachse 17, 38 einen Abstand a auf, der dem dreifachen Radius $r_K$ der Klappenscheibe 32 entspricht.

Eine Kegelachse $K_A$ verläuft von dem Schnittpunkt S1 durch die Klappenscheibe 32 und zwar zwischen dem Drehpunkt 46 und einem Schnittpunkt 56 aus Hauptachse 38 und Dichtungsmittellinie 39. Die beschriebene Lage der Kegelachse $K_A$ ist Nebenbedingung für die Schließwirkung in beiden Strömungsrichtungen.

In den Figuren weist jeweils das Gehäuse 37 die umlaufende Dichtfläche auf und die Klappenscheibe 32 Dichtungslamellen 44. Tatsächlich können diese Elemente auch vertauscht sein, so daß beispielsweise die Klappenscheibe 32 glatte Dichtflächen aufweist.

Die Herstellung und Bearbeitung der Dichtflächen bzw. Lamellenpakete wird nachfolgend anhand der Figuren 10 bis 15 erläutert. Dabei sind die Klappenscheiben 32 jeweils einfach exzentrisch angeordnet, mit dem Drehpunkt 46 auf der Hauptachse 38.

Die Figuren 10 bis 12 illustrieren die Herstellung des Sitzkonus. Dabei stellt Fig. 10 eine funktionelle Übersicht unter Darstellung von Klappenscheibe 32 und Gehäuse 37 dar. Tatsächlich werden die beiden Teile unabhängig voneinander gefertigt, entsprechend den Figuren 11 und 12.

Gemäß Fig. 11 ist das Gehäuse 37 in einer bestimmten Winkelstellung in eine Hilfsvorrichtung 60 eingespannt. Der Winkel α ergibt sich zwischen der Hauptachse 38 und der Kegelachse $K_A$. Diese ist zugleich Drehachse $D_A$ für einen weiter unten erläuterten Drehtisch 61.

Die Hilfsvorrichtung 60 ist auf dem Drehtisch 61 fest angeordnet. Oberhalb der Hilfsvorrichtung 60 ist ein rotierendes Werkzeug 62 gehalten, etwa ein Fräser oder eine Schleifscheibe. Das Werkzeug 62 ist mit einer zylindrischen Oberfläche 63 parallel zum Kegelmantel bzw. zur Kegellinie K1 ausgerichtet. Entsprechend ergibt sich eine gerade Bearbeitungslinie 64 durch den Materialabtrag des Werkzeugs 62, im vorliegenden Fall im Bereich der umlaufenden Dichtfläche am Gehäuse 37. Das Werkzeug 62 rotiert um eine Achse 65, die parallel zu der angestrebten Kontur der Dichtfläche und zum Kegelmantel verläuft.

Die Bearbeitung erfolgt in einem sogenannten CNC-Fräszentrum. Der Drehtisch 61 stellt dabei die B-Achse dar. Während der Bearbeitung wird die umlaufende Dichtungsfläche 42, 43 durch relativ schnelle Drehung des Werkzeugs 63 aus dem Gehäuse 37 herausgearbeitet. Zugleich erfolgt eine demgegenüber relativ langsame Drehung des Drehtisches 61 in Verbindung mit einer Axialbewegung des Werkzeugs 62 entlang dem Pfeil 66. Wichtig ist die genaue Ausrichtung des Werkzeugs 62 entsprechend dem berechneten Kegelmantel und die ebenfalls genaue Positionierung des Gehäuses 37 durch die Hilfsvorrichtung 60.

Gemäß Fig. 12 ist die Klappenscheibe 32 mit Dichtungslamellen 44 versehen. Deren Außendurchmesser müssen ebenfalls an den Sitzkonus bzw. den Kegelmantel angepaßt werden. Hierfür wird die Klappenscheibe 32 auf einer weiteren Hilfsvorrichtung 67 auf dem Drehtisch 61 befestigt und mit dem Werkzeug 62 wie zuvor das Gehäuse 37 bearbeitet, jedoch von außen. Entsprechend liegt die Achse 65 außerhalb des Kegelmantels (Kegellinien K1, K2). Bei der Bearbeitung erfolgt durch die Drehung des Tisches 61 eine für den Betrachter taumelnde Bewegung des Gehäuses 37 und der Klappenscheibe 32. Die umlaufende Dichtfläche liegt räumlich auf dem Mantel des berechneten Kegels. Aufgrund der geometrischen Verhältnisse ergibt sich für die Dichtfläche eine Ellipsenform.

Eine etwas andere Art der Bearbeitung zeigen die Figuren 13 bis 15. Fig. 13 zeigt wieder eine Zusammenstellung aller Teile analog Fig. 10.

Fig. 14 zeigt die Bearbeitung des Gehäuses 37. Im Gegensatz zu Fig. 11 ist hier ein nicht rotierendes Werkzeug 68 vorgesehen, das eine Schneidkante 69 aufweist. Das Gehäuse 37 ist wieder in einer Hilfsvorrichtung 60 fixiert. Letztere ist in Spannbacken 70 eines Drehfutters eingespannt. Für die Bearbeitung wird das Gehäuse 37 um die Kegelachse KA (zugleich Rotationsachse DA) gedreht, während das Werkzeug 68 lediglich in Pfeilrichtung und parallel zum Kegelmantel bewegt wird, siehe Pfeil 71.

Die Herstellung der Kontur im Bereich der Klappenscheibe 32 erfolgt wiederum durch Bearbeitung von außen, analog Fig. 12.

Anstelle der beschriebenen Herstellungsmethoden können auch andere verwendet werden, etwa eine Bearbeitung durch Lasern oder Wasserstrahlschneiden.

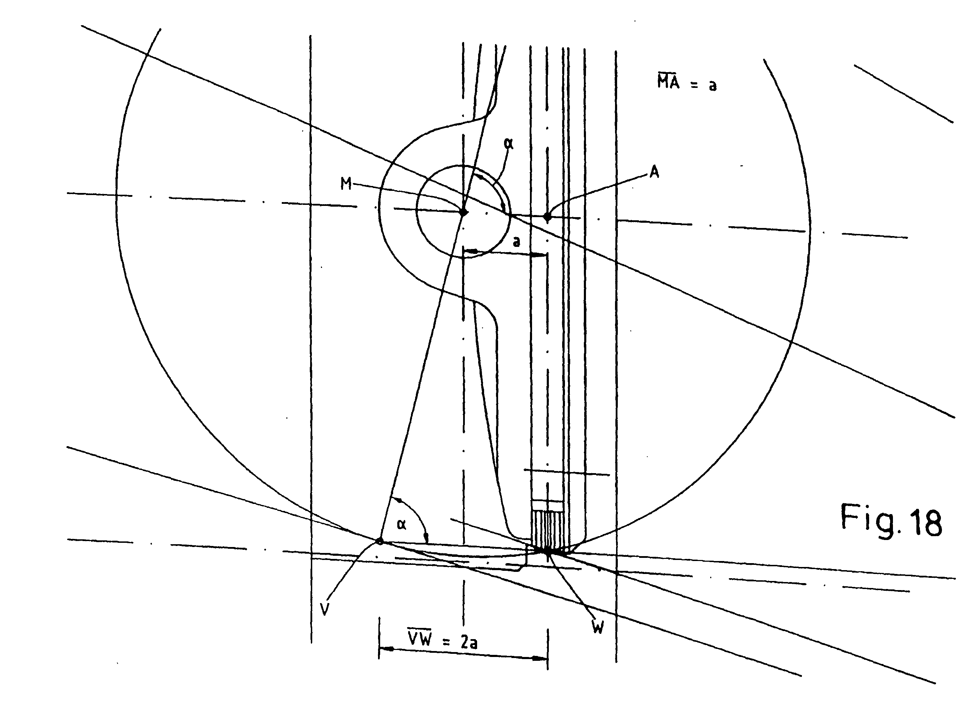

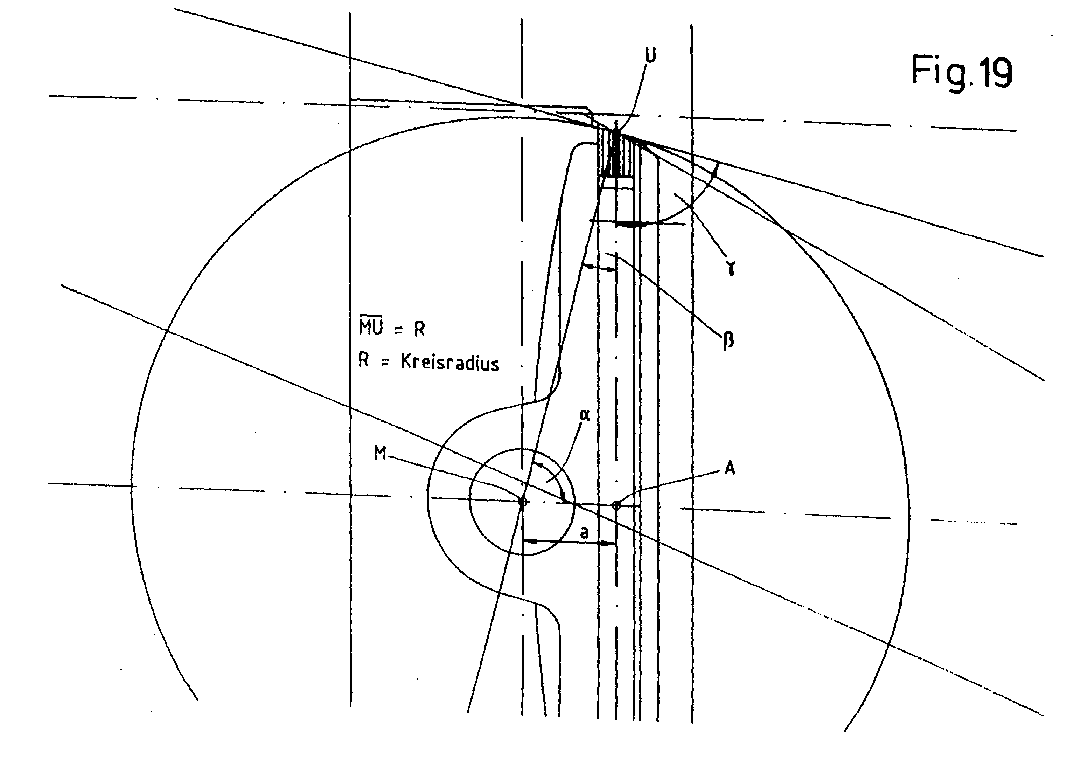

Anhand der Figuren 16 bis 19 wird nachfolgend die Berechnung der Konstruktionsdaten erläutert. Die verwendeten Indizes und Variablen unterscheiden sich von den oben angegebenen. Für die Konstruktion sind gegeben Schwenkradius R einer Absperrklappe und Abstand a von der Drehachse zur Dichtungsebene ($\overline{WAU}$).

R ergibt sich aus der Anforderung der Nennweite. a ergibt sich aus statischen Gründen der Steifigkeit (Materialauswahl, Druckanforderungen e.c.t.). Die Drehachse geht durch die Rohrachse.

Es gilt: R = Strecke $\overline{MU}$, naturgemäß auch Strecke $\overline{MV}$
und $\overline{MW}$
a = Strecke $\overline{MA}$.

Bestimmung der für die Konstruktion erforderlichen Maße:

Bestimmung von Winkel $\alpha$ :

$$\cos \alpha = \frac{a}{R} \Rightarrow \alpha = \arccos\left(\frac{a}{R}\right) \qquad\qquad \text{Gleichung (I.)}$$

Bestimmung von Winkel $\beta$:

$$\sin \beta = \frac{a}{R} \Rightarrow \beta = \arcsin\left(\frac{a}{R}\right) \qquad\qquad \text{Gleichung (II.)}$$

Bestimmung von Winkel $\gamma$ :

$$\gamma = 90° - \beta = 90° - \left(\arcsin\left(\frac{a}{R}\right)\right) \qquad\qquad \text{Gleichung (III.)}$$

Bestimmung von Strecke $\overline{UW}$:

$$\overline{UW} = 2\ \overline{UA} = 2a\ \tan \alpha = 2a\ \tan\left[\arccos\left(\frac{a}{R}\right)\right] \qquad\qquad \text{Gleichung (IV.)}$$

Bestimmung von Punkt $\Omega$ durch Strecke $\overline{W\Omega}$:

$$\overline{W\Omega} = \overline{UW}\ \tan \gamma = 2a\ \tan\left[\arccos\left(\frac{a}{R}\right)\right] \tan\left[90° - \left(\arcsin\left(\frac{a}{R}\right)\right)\right]$$

$$\overline{W\Omega} = 2a\ \tan\left[\arccos\left(\frac{a}{R}\right)\right]\tan\left[90° - \arcsin\left(\frac{a}{R}\right)\right] \qquad \text{Gleichung (V.)}$$

Zur weiteren Berechnung muß die Lage von Pkt. $\Phi$ bestimmt werden:

Das rechtwinklige Hilfsdreieck bestehend aus den Begrenzungspunkten $\Omega, \Phi$ und $\Gamma$ ist deckungsgleich mit dem Dreieck begrenzt durch die Pkt. U, V und W.

Damit gilt:

$$\text{Strecke } \overline{\Phi\Gamma} = 2a$$

$$\text{Strecke } \overline{\Gamma\Omega} = \overline{UW} = 2\ \overline{UA} \qquad \text{(siehe Gleichung IV.).}$$

Damit gilt für Strecke $\overline{T\Phi}$:

$$\overline{T\Phi} = \overline{W\Omega} - \overline{\Phi\Gamma} = \overline{W\Omega} - 2a$$

$$\overline{T\Phi} = 2a\ \tan\left[\arccos\left(\frac{a}{R}\right)\right]\tan\left[90° - \arcsin\left(\frac{a}{R}\right)\right] - 2a \qquad \text{Gleichung (VI.)}$$

Die Größe und Lage der Kegelwinkel lassen sich jetzt wie folgt bestimmen:

$$\tan\varphi = \frac{\overline{TW}}{\overline{T\Phi}} = \frac{\overline{\Gamma\Omega}}{\overline{T\Phi}} = \frac{\overline{UW}}{\overline{T\Phi}} = \frac{2\ \overline{UA}}{\overline{T\Phi}}$$

$$\varphi = \arctan\left\{\frac{2a\ \tan\left[\arccos\left(\frac{a}{R}\right)\right]}{2a\ \tan\left[\arccos\left(\frac{a}{R}\right)\right]\tan\left[90° - \arcsin\left(\frac{a}{R}\right)\right] - 2a}\right\}$$

$$\text{Gleichung (VII.)}$$

Bestimmung des Winkel $\eta$:

$$\tan\eta = \frac{\overline{TU}}{\overline{T\Phi}} = \frac{\overline{TW} + \overline{UW}}{\overline{T\Phi}} = \frac{2\ x\ \overline{TW}}{\overline{T\Phi}} = \frac{2\ x\ \overline{UW}}{\overline{T\Phi}}$$

$$\eta = arc\ \tan\left\{\frac{4a\ \tan\left[\arccos\left(\frac{a}{R}\right)\right]}{2a\ \tan\left[\arccos\left(\frac{a}{R}\right)\right]\tan\left[90° - \arcsin\left(\frac{a}{R}\right)\right] - 2a}\right\}$$

Gleichung (VIII.)

Damit wird der Kegelwinkel $\vartheta$:

$$\vartheta = \eta - \varphi = \arctan\left\{\frac{4a\ \tan\left[\arccos\left(\frac{a}{R}\right)\right]}{2a\ \tan\left[\arccos\left(\frac{a}{R}\right)\right]\tan\left[90° - \arcsin\left(\frac{a}{R}\right)\right] - 2a}\right\}$$

$$-\arctan\left\{\frac{2a\ \tan\left[\arccos\left(\frac{a}{R}\right)\right]}{2a\ \tan\left[\arccos\left(\frac{a}{R}\right)\right]\tan\left[90° - \arcsin\left(\frac{a}{R}\right)\right] - 2a}\right\}$$

Gleichung (IX.)

Die Lage des Kegelzentrums wird mit dem Winkel beschrieben:

$$\rho = \frac{\vartheta}{2} + \varphi = \frac{\eta - \varphi}{2} + \varphi = \frac{\eta + \varphi}{2} \qquad\qquad \text{Gleichung (X.)}$$

Verwendet man für das Verhältnis vom Drehachsabstand a und dem

$$\text{Radius R: } \varepsilon = \frac{a}{R}$$

ergibt sich für die vorstehenden Gleichungen von (I.) bis (X.) eine vereinfachte Schreibweise.
Wird außerdem der Term

$$2a\ \tan\left[\arccos\left(\frac{a}{R}\right)\right]$$

durch den Begriff $\sigma$ ersetzt,
lassen sich die Gleichungen I bis X wie folgt verkürzen:

Gleichung (I.) $\quad \alpha = \arccos\varepsilon$

Gleichung (II.) $\quad \beta = \arcsin\varepsilon$

Gleichung (III.) $\quad \gamma = 90° - \arcsin\varepsilon$

Gleichung (IV.) $\quad \overline{UW} = \sigma$

Gleichung (V.) $\quad \overline{W\Omega} = \sigma\,\tan[90° - \arcsin\varepsilon]$

Gleichung (VI.) $\quad \overline{T\Phi} = \sigma\,\tan[90° - \arcsin\varepsilon] - 2a$

Gleichung (VII.) $\quad \varphi = \arctan\dfrac{\sigma}{\sigma\,\tan[90° - \arcsin\varepsilon] - 2a}$

Gleichung (VIII.)
$$\eta = \arctan\left\{\frac{2\sigma}{\sigma\,\tan\left[90° - \arcsin\varepsilon\right] - 2a}\right\}$$

Gleichung (IX.)
$$\vartheta = \arctan\left\{\frac{2\sigma}{\sigma\,\tan\left[90° - \arcsin\varepsilon\right] - 2a}\right\} - \arctan\left\{\frac{\sigma}{\sigma\,\tan\left[90° - \arcsin\varepsilon\right] - 2a}\right\}$$

Gleichung X.
$$\rho = \frac{\arctan\left\{\dfrac{2\sigma}{\sigma\,\tan\left[90° - \arcsin\varepsilon\right] - 2a}\right\} + \arctan\left\{\dfrac{\sigma}{\sigma\,\tan\left[90° - \arcsin\varepsilon\right] - 2a}\right\}}{2}$$

Anhand der Fig. 20 bis 23 werden nachfolgend die Kräfte beim Schließen der Absperrklappe erläutert. Die Klappenscheibe ist mit einem Dichtelement in Form von Dichtungslamellen 44 versehen, siehe Fig. 2 und 3. Zur Vereinfachung wird in den Fig. 20 bis 23 von einem einzigen Federring 71 ausgegangen. Dieser kann das Dichtungselement der Klappenscheibe allein bilden oder mit weiteren dünnen Dichtringen ein Lamellenpaket ergeben. Nachfolgend wird davon ausgegangen, dass das Dichtungselement der Klappenscheibe relativ dünn ausfällt, somit nur der einzelne, in einer umlaufenden Fassung oder Nut schwimmende Federring 71 vorgesehen ist.

Beim Schließen der Absperrklappe kommt der Federring 71 am umlaufenden Dichtsitz des Klappengehäuses zur Anlage. Aufgrund der rotierenden Schließbewegung, Pfeil 72, wirkt ein starker Druck auf seitliche Bereich 73, 74, hervorgerufen durch die Kegelform des Dichtsitzes, etwa vergleichbar mit dem Auflaufen auf eine schiefe Ebene.

Am oberen Umfangsbereich 52 und unteren Umfangsbereich 53 wirken keine einwärts gerichteten Kräfte, da hier der Federring 71 die Rotationsachse (Drehpunkt 46) schneidet. Entsprechend ergibt sich in diesen Umfangsbereichen 52, 53 als Reaktion ein nach außen gerichteter Druck des Federrings 71. Somit passt sich der Federring 71 selbsttätig in den Dichtsitz ein. Die auftretenden Kräfte werden durch die Elastizität des Federrings 71 gleichmäßig verteilt bzw. weitergegeben. Wichtig hierfür ist zugleich die Lagerung des Federrings 71 derart, dass dieser quer zur Strömungsrichtung Anpass- oder Ausweichbewegungen durchführen kann.

Fig. 22 stellt die auftretenden Kräfte grafisch dar. Ein eingeschnürter Kreis 75 definiert mit seiner Abweichung gegenüber dem Außendurchmesser des Federrings 71 die verschiedenen Kräfte. In den seitlichen Bereichen 73, 74 sind die von außen auf den Federring 71 wirkenden Druckkräfte am größten, während in den oberen und unteren Umfangsbereichen 52, 53 die daraus resultierenden Reaktionskräfte dominieren. Diese sind naturgemäß nach außen gerichtet.

Anhand der Fig. 24 und 25 wird nachfolgend die Ellipsenform der Klappenscheibe bzw. des Dichtsitzes erläutert. Wie bereits weiter oben dargestellt, ist der Dichtsitz, d.h. die umlaufende Dichtfläche im Klappengehäuse 37 Teil eines Kegelmantels mit der Kegelspitze S1. Da die Kegelspitze S1 nicht auf der Hauptachse 38 liegt, verläuft der zugehörige Kegelschnitt unter einem Winkel zur Kegelachse $K_A$, der von 90° verschieden ist und hat die Form einer Ellipse. Die umlaufende Dichtfläche hat somit zwei Durchmesser entsprechend den in der Mathematik üblichen Abmessungen einer Ellipse, nämlich einen großen Durchmesser 2a und einen kleinen Durchmesser 2b. Dabei entspricht der große Durchmesser 2a in Fig. 24 der Strecke zwischen den Punkten A und C. Der kleine Durchmesser 2b, die Höhe der Klappenscheibe 32, ergibt sich durch eine senkrechte Linie 76 zur Kegelachse $K_A$ durch einen Punkt p, wobei diese Senkrechte den Schnittpunkt 56 der Dichtungsmittellinie 39 mit der Hauptachse 38 schneidet. Erkennbar sind außerdem Schnittpunkte s und t der Linie 76 mit den Mantellinien $K_1$ und $K_2$ des aufgespannten Kegels. Der kleine Durchmesser 2b ist gleich dem Abstand der Punkte s und t entlang der Linie 76.

Gemäß Fig. 24 liegt der Punkt S1 auf einer Parallelen 77 zur Hauptachse 38, wobei die Parallele 77 von der Hauptachse 38 einen Abstand entsprechend dem dreifachen Klappenradius $r_k$ aufweist ($r_k$= Abstand der Punkte 56 und C voneinander). Der Ort des Punktes S1 auf der Parallelen 77 ergibt sich durch die Tangente 78 zum Dichtkreis 55 im Punkt B (bzw. Punkt V in Fig. 16 bis 18). Je weiter somit der Drehpunkt 46 von der Dichtungsmittellinie 39 entfernt ist (Exzentrizität der Absperrklappe) um so weiter wandert der Punkt S1 auf der Parallelen 77 nach links in Richtung auf die Dichtungsmittellinie 39.

Anhand der Fig. 25 ist die elliptische Gestalt der umlaufenden Dichtung nachvollziehbar. Ein Kegel mit einer Kegelspitze Z und Mantellinien Z1, Z2 weist eine Kegelachse ZA auf, die zugleich Halbierende des Kegelwinkels $\vartheta$. ist. Ein Schnitt durch den Kreiskegel durch einen Punkt H in halber Höhe des Kegels und senkrecht zur Kegelachse ZA ergibt mit den Mantellinie Z1 und Z2 Schnittpunkte H1, H2. Der zugehörige schräge Kegelschnitt ist mit einer Doppellinie markiert. Diese besteht aus zwei gleichlangen Abschnitte D1 und D2, beide jeweils mit der Länge a. Der Punkt H zwischen den Abschnitten D1 und D2 liegt nicht auf der Kegelachse, sondern mit Abstand zum Schnittpunkt p der Kegelachse. Der Abstand zwischen den Punkten H und p ist ein Maß für die Exzentrizität entsprechend den Regeln zur Berechnung einer Ellipse. Genau ergibt sich die lineare Exzentrizität e einer Ellipse mit

$$e = \sqrt{a^2 - b^2}$$

und die numerische Exzentrizität $\varepsilon$ mit $\varepsilon$ = e/a.

Je nach Lage des schrägen Kegelschnitts kommt der Punkt H mit größerem oder kleinerem Abstand von der Kegelachse ZA zu liegen. Hierzu sind in Fig. 25 einige Kegelschnitte , ausgehend vom Punkt ZS eingezeichnet. Weiterhin ist erkennbar die Höhe der Ellipse des Kegelschnitts durch den Punkt H. Die Ellipse weist eine Höhe 2b auf, die dem Abstand der Punkte H1 und H2 voneinander entspricht. Die Punkte H und p der Fig. 25 entsprechen den Punkten 56 und p in Fig. 24. Zur Verdeutlichung sind dort auch die Abschnitt D1 und D2 eingezeichnet.

Die Besonderheit der erfindungsgemäßen Absperrklappe, gerade in Verbindung mit einem relativ dünnen Federring bzw. Dichtring liegt in den geringen Stellmomenten im Verhältnis zu herkömmlichen Absperrklappen. Bei einem theoretisch unendlich dünnen Dichtring treten die eingangs beschriebenen und einen Selbstschließ- oder -halteeffekt bewirkenden Kräfte nicht mehr auf. Aufgrund der symmetrischen Klappenanordnung - Drehachse auf der Hauptachse 38 = einfache Exzentrizität - gleichen sich die durch unterschiedliche Drücke auf beiden Seiten der Klappenscheibe herrschenden Kräfte aus. Die für das Öffnen und Schließen der Klappe erforderlichen Stellmomente sind relativ gering. Entsprechend klein kann ein Antrieb dimensioniert sein.

Bei geschlossener Klappe entsteht durch unterschiedliche Drücke auf beiden Seiten der Klappenscheibe eine geringfügige Durchbiegung derselben, die naturgemäß auf halber Höhe - in Fig. 26 entlang der X-Achse - am größten ist. Aufgrund der Durchbiegung und der zuvor erläuterten Kegelsitzanordnung kommt es zu einer Querverschiebung des Dichtrings bzw. Federrings 71. Diese Querverschiebung ist aber so gering, dass sie die erforderlichen Stellmomente nur in geringem Maße erhöht. Nachfolgend werden anhand der Fig. 26 und der sich ergebenden Gleichungen die senkrecht zur geschlossenen Klappenscheibe wirksamen Momente nach Verschiebung des Federrings 71 erläutert. Die Erläuterungen gelten auch für dicke Dichtringe oder Dichtungslamellenpakete und die daraus resultierenden unterschiedlichen Momente auf beiden Seiten der Klappenscheibe. Es gelten:

$$A_1 = 2 \int_c^d y\,dx \quad \text{mit} \quad y = f(x) \tag{XI.}$$

$$A_2 = 2 \int_d^e y\,dx \quad \text{mit} \quad y = f(x) \tag{XII.}$$

$$Sx_1 = \frac{\int_c^d y^2\,dx}{2 \int_c^d y\,dx} \tag{XIII.}$$

$$Sx_2 = \frac{\int_d^e y^2\,dx}{2 \int_d^e y\,dx} \tag{XIV.}$$

$$\Sigma Mi = 0 = M_1 - (M_2 + \Delta M) \tag{XV.}$$

$$\Delta M = M_1 - M_2 \tag{XVI.}$$

$$\Delta M = \left\{ P * 2 * \int_c^d y\,dx * \frac{\int_c^d y^2\,dx}{2 \int_c^d y\,dx} \right\} - \left\{ P * 2 \int_d^e y\,dx * \frac{\int_d^e y^2\,dx}{2 * \int_d^e y\,dx} \right\} \tag{XVII.}$$

$$\Delta M = P * \left\{ \left[ \int_c^d y\,dx * \frac{\int_c^d y^2\,dx}{\int_c^d y\,dx} \right] - \left[ \int_d^e y\,dx * \frac{\int_d^e y^2\,dx}{\int_d^e y\,dx} \right] \right\}$$

$$(XVIII.)$$

$$M_{R(\varphi)} \approx F_A * \bar{R}\left(\frac{1}{\pi} - \frac{1}{2}\sin\varphi\right)$$

$$(XIX.)$$

$$\text{mit } \left(0° \leq \varphi \leq 180°\right) \text{ und } \bar{R} = \frac{a+b}{2} \text{ und } 0{,}9 \leq \frac{b}{a} \leq 1$$

Der Federring 71 mit zugehöriger Klappenscheibe bildet eine Fläche von der Form einer Ellipse mit langem Durchmesser 2a (Breite) und kurzem Durchmesser 2b (Höhe). Der Drehpunkt 46 der Klappenscheibe ist gegenüber der Halbierenden (y-Achse) der Breite der 2a versetzt angeordnet. In Verbindung mit einer Druckdifferenz auf beiden Seiten der Klappenscheibe ergibt sich ein resultierendes Drehmoment, das je nach Richtung oder Vorzeichen eine Verstellung der Klappenscheibe unterstützt oder bremst. Die Flächen beidseits der durch den Drehpunkt 46 definierten senkrechten Linie berechnen sich anhand der Gleichungen (XI.) und (XII.). Als Funktion $y = f(x)$ ist hier die für eine Ellipse gültige Funktion auzusetzen. Aufgrund der allgemeinen Formel $y = f(x)$ lassen sich mit den Gleichungen (XI.) bis (XVIII.) auch die Momente an Klappenscheiben anderer Form berechnen. Es muss lediglich die Funktion bestimmbar sein. Die wirksamen Hebelarme werden anhand der Lage der Druckschwerpunkte $S_{X1}$ und $S_{X2}$ bestimmt, siehe Gleichungen (XIII.) und (XIV.). Das resultierende Moment, siehe Gleichungen (XV.) bis (XVIII.) ergibt sich aus der Differenz der einzelnen Momente, wobei diese über den wirksamen Druck p, die errechneten Flächen A1 und A2 sowie die wirksamen Hebelarme $S_{X1}$ und $S_{X2}$ bestimmt werden. In Gleichung (XVIII.) sind die jeweiligen Größen eingesetzt und soweit als möglich herausgekürzt. Die für die Integrale bedeutsamen Endpunkte c, d und e sind aus Fig. 26 ersichtlich. c und e sind zugleich die seitlichen Randpunkte des Federrings 71 nach Querverschiebung desselben bzw. die auf der jeweils betrachteten Seite der Klappenscheibe wirksamen seitlichen Randpunkte, während d den Ort der durch den Drehpunkt 46 definierten Achse markiert.

Gleichung (XIX.) beschreibt allgemein die außen am Umfang des Federrings 71 in Fig. 20 auftretenden Biegemomente in Abhängigkeit vom Winkel φ des Radius R gegenüber der Waagerechten und ausgelöst durch das Anpressen der seitlichen Bereiche an den Konussitz der umlaufenden Dichtfläche DF beim Schließen der Klappenscheibe. $F_A$ bezeichnet die dabei wirksame Kraft. Die Werte für ($1/\pi - \frac{1}{2}\sin\varphi$) in der rechten Spalte der nachfolgenden Tabelle sollen den in Fig. 22 gezeigten Pfeilen zwischen dem eingeschnürten Kreis 75 und dem Umfang des Federrings 71 entsprechen. Gleichung (XIX.) gibt für das Moment $M_{R(\varphi)}$ einen recht genauen Wert wieder, sofern b/a zwischen 0,9 und 1 liegt.

Tabelle

| zu Fig. 20 und 22 | | | |
|---|---|---|---|
| φ | φ | ½ sin | ($1/\pi$ - ½ sinφ) |
| 0 | 180 | 0 | 0,318 |
| 10 | 170 | 0,087 | 0,231 |
| 20 | 160 | 0,171 | 0,147 |
| 30 | 150 | 0,250 | 0,068 |
| 40 | 140 | 0,321 | - 0,003 |

Tabelle (fortgesetzt)

| zu Fig. 20 und 22 | | | |
|---|---|---|---|
| φ | φ | ½ sin | (1/π - ½ sinφ) |
| 50 | 130 | 0,383 | - 0,065 |
| 60 | 120 | 0,433 | - 0,115 |
| 70 | 110 | 0,470 | - 0,152 |
| 80 | 100 | 0,492 | - 0,174 |
| 90 | 90 | 0,5 | - 0,182 |

Fig. 27 zeigt schließlich noch den Einbau des Federrings 71 in die Klappenscheibe 32. Der Federring 71 ist in einer umlaufenden Nut 79 gehalten, die gebildet ist durch die Klappenscheibe 32 und einen auf der Klappenscheibe verschraubten Haltering 80, dessen Außendurchmesser etwas geringer ist als der Außendurchmesser des Federrings 71. Dem Haltering 80 gegenüberliegend, d.h. auf der anderen Seite des Federrings 71 ist in einer axial gerichteten Nut 81 der Klappenscheibe 32 ein Dichtring 82 angeordnet, so dass ein von der Klappenscheibe 32 abgesperrtes Medium nicht innen am Federring 71 vorbeiströmen kann.

Fig. 27 enthält noch eine Besonderheit. Die eingezeichnete Ellipse E repräsentiert einen Kegelschnitt auf der in der Fig. rechten Seite des Federrings 71, entlang der Linie $L_R$. In diesem Fall wird die Ellipse E halbiert durch die Hauptachse 38, die den Drehpunkt 46 und den Punkt 56 schneidet. Würde man statt dessen den Kegelschnitt entlang der linken Seite des Federrings 71 legen, ergäbe sich ein Schnittpunkt der entsprechenden Kegelschnittlinie (nicht gezeigt) mit der die zugehörige Ellipse halbierenden Linie genau im Punkt $P_L$, in Fig. 27 als kleines Kreuz eingezeichnet.

Der Konussitz der umlaufenden Dichtungsfläche DF ist durch die Angabe der Kegelspitze S1 scharf definiert und ergibt einen hier so bezeichneten Hauptkegel. Ein Konussitz mit einem anderen zu Grunde zu legenden Kegel ist nicht ausgeschlossen. Es sollten solche Kegel möglich sein, deren Kegelspitze dichter an der Hauptachse 38 und zugleich auch dichter an der Dichtungsmittellinie 39 liegt als S1, siehe Fig. 24. Insbesondere gilt dies für Kegelspitzen, die innerhalb des Hauptkegels liegen, also zwischen den Mantellinien K1 und K2.

In den voranstehend beschriebenen Ausführungsbeispielen ist als Kegel stets ein Kreiskegel vorgesehen. Tatsächlich möglich ist auch ein Kegel anderer Form, etwa einer, bei dem der Kegelschnitt zur Erzeugung der umlaufenden Dichtfläche eine kreisrunde Form aufweist. Allgemein sollte ein Kegelschnitt senkrecht zur Kegelachse eine ausschließlich konvexe Umfangslinie bzw. keine konkaven Abschnitte aufweisen. Wichtig ist eine nur einfache Exzentrizität der Klappenscheibe, allenfalls ein nur geringer Abstand der Drehachse von der Hauptachse (geringe doppelte Exzentrizität), so dass nur geringe Momentenunterschiede für unterschiedliche Strömungsrichtungen auftreten.

Bezugszeichenliste

10 Absperrklappe
11 Klappenscheibe
12 Gehäuse
13 Drehachse
14 Dichtsitz
15 Dichtfläche
16 Dichtfläche
17 Hauptachse
18 Strömungsrichtung
19 Strömungsrichtung
20 Dichtungsmittellinie
21 Schnittpunkt
22 Dichtkreis
23 Pfeil
24 Pfeil
25 rechte Scheibenseite
26 linke Scheibenseite
27 Seitenfläche
28 Seitenfläche
29 Seitenfläche

| 30 | Seitenfläche |
|----|--------------|
| 31 | Absperrklappe |
| 32 | Klappenscheibe |
| 33 | Pfeil |
| 34 | Pfeil |
| 35 | Pfeile |
| 36 | Pfeile |
| 37 | Gehäuse |
| 38 | Hauptachse |
| 39 | Dichtungsmittellinie |
| 40 | rechte Seite |
| 41 | linke Seite |
| 42 | Dichtfläche |
| 43 | Dichtfläche |
| 44 | Dichtungslamellen |
| 45 | Kegelachse |
| 46 | Drehpunkt |
| 47 | Drehwelle |
| 48 | Rohrflansch |
| 49 | Rohrflansch |
| 50 | Lager |
| 51 | Lager |
| 52 | Umfangsbereich |
| 53 | Umfangsbereich |
| 55 | Dichtkreis |
| 56 | Schnittpunkt |
| 60 | Hilfsvorrichtung |
| 61 | Drehtisch |
| 62 | Werkzeug |
| 63 | Oberfläche |
| 64 | Bearbeitungslinie |
| 65 | Achse |
| 66 | Pfeil |
| 67 | Hilfsvorrichtung |
| 68 | Werkzeug |
| 69 | Schneidkante |
| 70 | Spannbacken |
| 71 | Federring |
| 72 | Pfeil |
| 73 | seitlicher Bereich |
| 74 | seitlicher Bereich |
| 75 | Kreis |
| 76 | Linie |
| 77 | Parallele |
| 78 | Tangente |
| 79 | Nut |
| 80 | Haltering |
| 81 | Nut |
| 82 | Dichtring |

| a | Abstand |
|----|--------------|
| A | Schnittpunkt |
| B | Schnittpunkt |
| C | Schnittpunkt |
| A1 | Seitenfläche |
| A2 | Seitenfläche |
| A3 | Seitenfläche |
| A4 | Seitenfläche |

DN      Nenndurchmesser
E       Ellipse
G1      Gerade
KA      Kegelachse
K1      Mentallinie
K2      Mantellinie
$L_R$   Linie
$P_L$   Punkt
$r_K$   Radius der Klappenscheibe
S0      Schnittpunkt
S1      Konstruktionspunkt
T1      Tangente
α       Winkel

**Patentansprüche**

1. Absperrklappe (10) für Druckräume, insbesondere für Behälter oder Rohrleitungen, mit einer relativ zu einer Drehachse (13, 46) in einem Gehäuse (12, 37) schwenkbaren Klappenscheibe (11, 32), die in Dichtstellung den Durchfluss durch das Gehäuse (12, 37) in zwei einander entgegengesetzte Strömungsrichtungen im Bereich einer Dichtung verschließt, wobei die Klappenscheibe (32) exzentrisch, das heißt mit einer Drehachse (46) außerhalb einer Dichtungsmittellinie (39) angeordnet ist, und wobei die Drehachse insbesondere durch eine Hauptachse der Absperrklappe geht, **dadurch gekennzeichnet, dass** die Dichtung eine umlaufende Dichtfläche DF mit folgender Lage aufweist:

   a. Die Dichtfläche DF ist Teil eines Kegelmantels, dessen Mantellinien (K1, K2) die Winkel der Dichtfläche DF relativ zur Hauptachse (17, 38) der Absperrklappe definieren,

   b. die Mantellinien schneiden einander im Bereich einer Kegelspitze (S1), deren Lage wie folgt bestimmbar ist:

      b1. die Dichtungsmittellinie (39) schneidet die Hauptachse (38) senkrecht zu dieser,

      b2. die Drehachse (46) ist mit Abstand zur Dichtungsmittellinie (39) angeordnet, insbesondere auf der Hauptachse (38), und verläuft quer zur Dichtungsmittellinie und zur Hauptachse,

      b3. mit der Drehachse (46) als Mittelpunkt wird ein Dichtkreis (55) festgelegt, dessen Durchmesser kleiner ist als die Nennweite DN der Rohrleitung oder des zur Verfügung stehenden Innendurchmesser innerhalb der Absperrklappe (31),

      b4. Schnittpunkte des Dichtkreises (55) mit der Dichtungsmittellinie (39) werden als A und C bezeichnet, der Schnittpunkt des Dichtkreises (55) mit einer Geraden durch A und den Drehpunkt (46) wird als B bezeichnet, wobei B dem Punkt A über den Drehpunkt (46) gegenüberliegt,

      b5. ein Schnittpunkt einer Tangente (T1) am Dichtkreis (55) im Punkt A mit einer Geraden B - C wird als S0 bezeichnet,

      b6. die Strecke A - B wird entlang der Tangente (T1) verschoben, bis A auf S0 liegt; das verschobene B gibt dann die Kegelspitze S1 an,

   oder die Strecke A - S0 wird entlang der Strecke A - B verschoben, bis A auf B liegt; das verschobene S0 gibt dann die Kegelspitze S1 an.

2. Absperrklappe nach Anspruch 1, **dadurch gekennzeichnet, dass** die Klappenscheibe (11, 32) in beide Strömungsrichtungen selbstschließend ist, und dass hierzu die Klappenscheibe (11, 32) in Schließstellung in beiden Strömungsrichtungen unterschiedlich große Flächen seitlich neben der Drehachse (13, 46) aufweist, wobei die jeweils größeren Flächen einander über die Drehachse (13, 46) diagonal gegenüberliegen, ebenso die kleineren Flächen.

3. Absperrklappe nach Anspruch 1, **dadurch gekennzeichnet, dass** die Klappenscheibe (11, 32) um eine Drehachse (13, 46) schwenkt, die durch eine Hauptachse (17, 38) der Absperrklappe geht, insbesondere durch eine Rohrachse.

4. Absperrklappe nach Anspruch 1, **dadurch gekennzeichnet, dass** die Dichtung eine umlaufende Dichtfläche (15, 16, 42, 43) aufweist, - an der Klappenscheibe (11, 32) und/oder am Gehäuse (12, 37) -, die Teil eines Kegelmantels ist.

5. Absperrklappe nach Anspruch 1, **dadurch gekennzeichnet, dass** der Kegelmantel eine Kegelspitze (S1) aufweist, die außerhalb einer Hauptachse (17, 38) der Absperrklappe liegt, insbesondere mit einem Abstand zu dieser, der größer ist als der Radius $r_K$ der Klappenscheibe (11, 32).

6. Absperrklappe nach Anspruch 5, **dadurch gekennzeichnet, dass** die Kegelspitze (S1) von der Hauptachse (17, 38) einen Abstand a aufweist mit a = $3r_K$,
wobei a mindestens in Richtung quer zur Drehachse (13, 46) und quer zur Hauptachse (17, 38) der Absperrklappe gerichtet ist.

7. Absperrklappe nach Anspruch 1, **dadurch gekennzeichnet, dass** die Drehachse (13, 46) der Klappenscheibe (11, 32) nicht genau auf der Hauptachse (17, 38) liegt, sondern um einen Abstand quer zur Hauptachse verschoben ist, wobei der Abstand kleiner oder gleich der halben maximalen Tiefe $T_D$ der Dichtfläche (15, 16, 42, 43) in Richtung quer zur Hauptachse (17, 38) ist.

8. Absperrklappe nach Anspruch 1, **dadurch gekennzeichnet, dass** die Kegelspitze nicht im Punkt S1 liegt, sondern dichter an der Hauptachse 38 und zugleich dichter an der Dichtungsmittellinie 39.

9. Absperrklappe nach Anspruch 1, **dadurch gekennzeichnet, dass** die Kegelspitze nicht im Punkt S1 liegt, sondern zwischen den zu S1 gehörenden Mantellinien K1 und K2.

10. Verfahren zur Herstellung einer Absperrklappe (10, 31) nach einem der Ansprüche 1 bis 9, **dadurch gekennzeichnet, dass** für die Bearbeitung der Dichtungsgeometrie im Gehäuse (12, 37) letzteres auf einem drehbaren Tisch (61) fixiert wird, mit einer Ausrichtung derart, dass die Drehachse (DA) des Tisches zugleich Kegelachse (KA) der Dichtfläche ist, wobei ein rotierendes Werkzeug (62) mit einer Bearbeitungslinie (64) entlang einer Kegelmantellinie das Material des Gehäuses (37) im Bereich der Dichtfläche abträgt und wobei der Tisch (61) gedreht wird.

11. Verfahren nach Anspruch 10, **dadurch gekennzeichnet, dass** das rotierende Werkzeug (62) entlang der Kegelmantellinie (K1) in Richtung auf die Kegelspitze und zurück verfahren wird.

12. Verfahren zur Herstellung einer Absperrklappe nach einem der Ansprüche 1-9, **dadurch gekennzeichnet, dass** für die Bearbeitung der Dichtungsgeometrie der Klappenscheibe (11, 32) letztere auf einem drehbaren Tisch (61) fixiert wird, mit einer Ausrichtung derart, dass die Drehachse (DA) des Tisches zugleich Kegelachse (KA) der Dichtfläche ist, wobei ein rotierendes Werkzeug (62) mit einer Bearbeitungslinie (64) entlang einer Kegelmantellinie das Material der Klappenscheibe (32) bzw. das Material an der Klappenscheibe vorgesehener Dichtungselemente abträgt und wobei der Tisch gedreht wird.

13. Verfahren nach Anspruch 12, **dadurch gekennzeichnet, dass** das rotierende Werkzeug (62) entlang der Kegelmantellinie (K1) in Richtung auf die Kegelspitze und zurück verfahren wird.

14. Verfahren zur Herstellung einer Absperrklappe (10, 31) nach einem der Ansprüche 1 bis 9, **dadurch gekennzeichnet, dass** für die Bearbeitung der Dichtungsgeometrie im Gehäuse (12, 37) letzteres auf einem drehbaren Tisch oder mittelbar durch Spannbacken (70) einer drehenden Bearbeitungsmaschine fixiert wird, mit einer Ausrichtung derart, dass die Drehachse (DA) des Tisches oder der Bearbeitungsmaschine zugleich Kegelachse (KA) der Dichtfläche (42, 43) ist, wobei ein Schneidwerkzeug (68) mit einer Schneidkante (69) das Material des Gehäuses (37) durch Drehung des Tisches bzw. der Bearbeitungsmaschine abträgt und wobei das Schneidwerkzeug (68) mit der Schneidkante (69) entlang einer Kegelmantellinie (K1) verfahren wird.

15. Verfahren zur Herstellung einer Absperrklappe nach einem der Ansprüche 1 bis 9, **dadurch gekennzeichnet, dass** für die Bearbeitung der Dichtungsgeometrie der Klappenscheibe (32) letztere auf einem drehbaren Tisch oder mittelbar mit Spannbacken (70) einer Bearbeitungsmaschine fixiert wird, mit einer Ausrichtung derart, dass die Drehachse (DA) des Tisches bzw. der Bearbeitungsmaschine zugleich Kegelachse (KA) der Dichtfläche (42, 43) ist, wobei ein Schneidwerkzeug (68) mit einer Schneidkante (69) das Material der Klappenscheibe (32) bzw. von Dichtungselementen an der Klappenscheibe durch Drehung des Tisches bzw. der Bearbeitungsmaschine abträgt und wobei das Schneidwerkzeug (68) mit der Schneidkante (69) entlang einer Kegelmantellinie in Richtung auf die Kegelspitze S0 oder zurück verfahren wird.

**Claims**

1. Shut-off flap (10) for pressure spaces, in particular for vessels or pipelines, with a flap disc (11, 32) which is pivotable relative to an axis of rotation (13, 46) in a housing (12, 37) and which, in the sealing position, closes the throughflow through the housing (12, 37) in two mutually opposite flow directions in the region of a seal, the flap disc (32) being arranged eccentrically, that is to say with an axis of rotation (46) outside a seal centre line (39), and the axis of rotation passing, in particular, through a major axis of the shut-off flap, **characterized in that** the seal has a peripheral sealing surface DF with the following position:

   a. the sealing surface DF is part of a taper envelope, the generatrices (K1, K2) of which define the angles of the sealing surface DF in relation to the major axis (17, 38) of the shut-off flap,

   b. the generatrices intersect one another in the region of a taper apex (S1), the position of which can be determined as follows:

      b1. the seal centre line (39) intersects the major axis (38) perpendicularly to the latter,

      b2. the axis of rotation (46) is arranged at a distance from the seal centre line (39), in particular on the major axis (38), and runs transversely to the seal centre line and to the major axis,

      b3. with the axis of rotation (46) as the centre point, a sealing circle (55) is defined, the diameter of which is smaller than the nominal width DN of the pipeline or of the available inside diameter within the shut-off flap (31),

      b4. intersection points of the sealing circle (55) with the seal centre line (39) are designated as A and C, and the intersection point of the sealing circle (55) with a straight line through A and the centre of rotation (46) is designated as B, B being located opposite the point A across the centre point,

      b5. an intersection point of a tangent (T1) to the sealing circle (55) at the point A with a straight line B - C is designated as S0,

      b6. the segment A - B is displaced along the tangent (T1) until A lies on S0; the displaced B then indicates the taper apex S1,

   or the segment A - S0 is displaced along the segment A - B until A lies on B; the displaced S0 then indicates the taper apex S1.

2. Shut-off flap according to Claim 1, **characterized in that** the flap disc (11, 32) is self-closing in both flow directions, and **in that**, for this purpose, in the closing position, the flap disc (11, 32) has, in the two flow directions, surfaces of different sizes laterally next to the axis of rotation (13, 46), both the larger surfaces and the smaller surfaces in each case being located diagonally opposite one another across the axis of rotation (13, 46).

3. Shut-off flap according to Claim 1, **characterized in that** the flap disc (11, 32) pivots about an axis of rotation (13, 46) which passes through a major axis (17, 38) of the shut-off flap, in particular through a pipe axis.

4. Shut-off flap according to Claim 1, **characterized in that** the seal has a peripheral sealing surface (15, 16, 42, 43) - on the flap disc (11, 32) and/or on the housing (12, 37) - which is part of a taper envelope.

5. Shut-off flap according to Claim 1, **characterized in that** the taper envelope has a taper apex (S1) which lies outside a major axis (17, 38) of the shut-off flap, in particular at a distance from said major axis which is greater than the radius rK of the flap disc (11, 32).

6. Shut-off flap according to Claim 5, **characterized in that** the taper apex (S1) is at a distance a from the major axis (17, 38) of a = 3rK, a being directed at least transversely to the axis of rotation (13, 46) and transversely to the major axis (17, 38) of the shut-off flap.

7. Shut-off flap according to Claim 1, **characterized in that** the axis of rotation (13, 46) of the flap disc (11, 32) does not lie exactly on the major axis (17, 38), but is displaced at a distance transversely to the major axis, the distance being smaller than or equal to half the maximum depth TD of the sealing surface (15, 16, 42, 43) transversely to the major axis (17, 38).

8. Shut-off flap according to Claim 1, **characterized in that** the taper apex does not lie at the point S1, but more closely to the major axis 38 and at the same time more closely to the seal centre line 39.

9. Shut-off flap according to Claim 1, **characterized in that** the taper apex does not lie at the point S1, but between the generatrices K1 and K2 belonging to S1.

10. Method for the production of a shut-off flap (10, 31) according to one of Claims 1 to 9, **characterized in that**, for machining the seal geometry in the housing (12, 37), the latter is fixed on a turntable (61) with an orientation such that the axis of rotation (DA) of the table is at the same time the taper axis (KA) of the sealing surface, a rotating tool (62) removing the material of the housing (37) in the region of the sealing surface by means of a machining line (64) along a taper generatrix, and the table (61) being rotated.

11. Method according to Claim 10, **characterized in that** the rotating tool (62) is moved along the taper generatrix (K1) in the direction of the taper apex and back again.

12. Method for the production of a shut-off flap according to one of Claims 1-9, **characterized in that**, for machining the seal geometry of the flap disc (11, 32), the latter is fixed on a turntable (61), with an orientation such that the axis of rotation (DA) of the table is at the same time the taper axis (KA) of the sealing surface, a rotating tool (62) removing the material of the flap disc (32) or the material of the sealing elements provided on the flap disc by means of a machining line (64) along a taper generatrix, and the table being rotated.

13. Method according to Claim 12, **characterized in that** the rotating tool (62) is moved along the taper generatrix (K1) in the direction of the taper apex and back again.

14. Method for production of a shut-off flap (10, 31) according to one of Claims 1 to 9, **characterized in that**, for machining the seal geometry in the housing (12, 37), the latter is fixed on a turntable or indirectly by chucking jaws (70) of a rotating machine tool, with an orientation such that the axis of rotation (DA) of the table or of the machine tool is at the same time the taper axis (KA) of the sealing surface (42, 43), a cutting tool (68) with a cutting edge (69) removing the material of the housing (37) as a result of the rotation of the table or of the machine tool, and the cutting tool (68) being moved with the cutting edge (69) along a taper generatrix (K1).

15. Method for production of a shut-off flap according to one of Claims 1 to 9, **characterized in that**, for machining the seal geometry of the flap disc (32), the latter is fixed on a turntable or indirectly by chucking jaws (70) of a machine tool, with an orientation such that the axis of rotation (DA) of the table or of the machine tool is at the same time the taper axis (KA) of the sealing surface (42, 43), a cutting tool (68) with a cutting edge (69) removing the material of the flap disc (32) or of sealing elements on the flap disc as a result of the rotation of the table or of the machine tool, and the cutting tool (68) being moved with the cutting edge (69) along a taper generatrix in the direction of the taper apex S0 or back.

## Revendications

1. Robinet à papillon (10) pour espaces sous pression, en particulier pour récipients ou tuyauteries, comprenant un papillon (11, 32) qui peut tourner autour d'un axe (13, 46) dans un corps (12, 37) et, en position fermée, arrête l'écoulement à travers le corps (12, 37) dans deux sens opposés dans la zone d'un joint étanche, le papillon (32) étant monté excentriquement, c'est-à-dire avec un axe de rotation (46) écarté d'un axe d'obturation (39), et l'axe de rotation coupant en particulier un axe principal du robinet, **caractérisé par le fait que** le joint étanche présente une surface périphérique de joint DF ayant la position suivante :

a. la surface de joint DF est une partie d'une surface conique dont les génératrices (K1, K2) définissent les angles que fait la surface de joint DF avec l'axe principal (17, 38) du robinet,

b. les génératrices se coupent dans la zone d'une pointe conique (S1) dont la position peut être déterminée de la manière suivante :

b1. l'axe d'étanchéité (39) coupe l'axe principal (38) à angle droit,

b2. l'axe de rotation (46) est situé à distance de l'axe d'obturation (39), en particulier sur l'axe principal (38), et est perpendiculaire à l'axe d'obturation et à l'axe principal,

b3. l'axe de rotation (46), comme centre, fixe un cercle d'obturation (55) dont le diamètre est inférieur au diamètre nominal DN de la tuyauterie ou au diamètre intérieur disponible à l'intérieur du robinet (31),

b4. les points d'intersection du cercle d'obturation (55) avec l'axe d'obturation (39) sont désignés par A et C, le point d'intersection du cercle d'obturation (55) avec une droite passant par A et par l'axe de rotation (46) est désigné par B, et B est en face du point A au-delà de l'axe de rotation (46),

b5. le point d'intersection de la tangente (T1) au cercle d'obturation (55) au point A avec la droite BC est désigné par S0,

b6. la droite AB est déplacée le long de la tangente (T1) jusqu'à ce que A soit en S0, et le point B déplacé indique alors la pointe conique S1,

ou bien la droite AS0 est déplacée le long de la droite AB jusqu'à ce que A soit en B, et le point S0 déplacé indique alors la pointe conique S1.

2. Robinet à papillon selon la revendication 1, **caractérisé par le fait que** le papillon (11, 32) se ferme automatiquement dans les deux sens d'écoulement et présente pour cela en position fermée dans les deux sens d'écoulement des surfaces de grandeur différente sur le côté de l'axe de rotation (13, 46), les surfaces les plus grandes se faisant face en diagonale au-delà de l'axe de rotation (13, 46), de même que les surfaces les plus petites.

3. Robinet à papillon selon la revendication 1, **caractérisé par le fait que** le papillon (11, 32) tourne autour d'un axe (13, 46) qui coupe un axe principal (17, 38) du robinet, en particulier un axe de tuyau.

4. Robinet à papillon selon la revendication 1, **caractérisé par le fait que** le joint étanche présente une surface périphérique de joint (15, 16, 42, 43), sur le papillon (11, 32) et/ou sur le corps (12, 37), qui est une partie d'une surface conique.

5. Robinet à papillon selon la revendication 1, **caractérisé par le fait que** la surface conique présente une pointe conique (S1) qui est écartée d'un axe principal (17, 38) du robinet, en particulier située à une distance de celui-ci qui est supérieure au rayon $r_k$ du papillon (11, 32).

6. Robinet à papillon selon la revendication 5, **caractérisé par le fait que** la pointe conique (S1) est à une distance a égale à $3r_k$ de l'axe principal (17, 38), a étant dirigée au moins perpendiculairement à l'axe de rotation (13, 46) et perpendiculairement à l'axe principal (17, 38) du robinet.

7. Robinet à papillon selon la revendication 1, **caractérisé par le fait que** l'axe de rotation (13, 46) du papillon (11, 32) n'est pas situé exactement sur l'axe principal (17, 38), mais est décalé d'une certaine distance perpendiculairement à cet axe, cette distance étant inférieure ou égale à la moitié de la profondeur maximale $T_D$ de la surface de joint (15, 16, 42, 43) dans la direction perpendiculaire à l'axe principal (17, 38).

8. Robinet à papillon selon la revendication 1, **caractérisé par le fait que** la pointe conique n'est pas située au point S1, mais plus près de l'axe principal (38) et en même temps plus près de l'axe d'obturation (39).

9. Robinet à papillon selon la revendication 1, **caractérisé par le fait que** la pointe conique n'est pas située au point S1, mais entre les génératrices K1 et K2 appartenant à S1.

**10.** Procédé de fabrication d'un robinet à papillon (10, 31) selon l'une des revendications 1 à 9, **caractérisé par le fait que** pour la réalisation de la forme du joint étanche dans le corps (12, 37), ce dernier est fixé sur une table tournante (61), placé de façon que l'axe de rotation (DA) de la table soit en même temps l'axe (KA) du cône de la surface d'obturation, un outil rotatif (62) enlevant alors par une ligne d'usinage (64), le long d'une génératrice du cône, la matière du corps (37) dans la zone de la surface d'obturation, et la table (61) étant soumise à rotation.

**11.** Procédé selon la revendication 10, **caractérisé par le fait que** l'outil rotatif (62) est déplacé le long de la génératrice (K1) du cône en direction de la pointe conique et en sens inverse.

**12.** Procédé de fabrication d'une robinet à papillon selon l'une des revendications 1 à 9, **caractérisé par le fait que** pour la réalisation de la forme du joint étanche sur le papillon (11, 32), ce dernier est fixé sur une table tournante (61), placé de façon que l'axe de rotation (DA) de la table soit en même temps l'axe du cône (KA) de la surface d'obturation, un outil rotatif (62) enlevant alors par une ligne d'usinage (64), le long d'une génératrice du cône, la matière du papillon (32) ou la matière d'éléments d'étanchéité prévus sur le papillon, et la table étant soumise à rotation.

**13.** Procédé selon la revendication 12, **caractérisé par le fait que** l'outil rotatif (62) est déplacé le long de la génératrice (K1) du cône en direction de la pointe conique et en sens inverse.

**14.** Procédé de fabrication d'un robinet à papillon (10, 31) selon l'une des revendications 1 à 9, **caractérisé par le fait que** pour la réalisation de la forme du joint étanche dans le corps (12, 37), ce dernier est fixé sur une table tournante ou indirectement par des mâchoires (70) d'une machine-outil rotative, placé de façon que l'axe de rotation (DA) de la table ou de la machine-outil soit en même temps l'axe (KA) du cône de la surface d'obturation (42, 43), un outil coupant (68) enlevant alors par une arête coupante (69) la matière du corps (37) par rotation de la table ou de la machine-outil, et l'outil coupant (68), avec l'arête coupante (69), étant déplacé le long d'une génératrice (K1) du cône.

**15.** Procédé de fabrication d'un robinet à papillon selon l'une des revendications 1 à 9, **caractérisé par le fait que** pour la réalisation de la forme du joint étanche sur le papillon (32), ce dernier est fixé sur une table tournante ou indirectement par des mâchoires (70) d'une machine-outil, placé de façon que l'axe de rotation (DA) de la table ou de la machine-outil soit en même temps l'axe (KA) du cône de la surface d'obturation (42, 43), un outil coupant (68) enlevant alors par une arête coupante (69) la matière du papillon (32) ou d'éléments d'étanchéité prévus sur le papillon par rotation de la table ou de la machine-outil, et l'outil coupant (68), avec l'arête coupante (69), étant déplacé le long d'une génératrice (K1) du cône en direction de la pointe S0 du cône et en sens inverse.

**Fig. 1**

EP 1 169 588 B1

Drehrichtung „ZU"

31

33

42

A3

32

36

46

41

38

45

39

A4

44

43

37

34

# Fig. 2

Drehrichtung „AUF"

23

**Fig. 3**

Fig. 5

Fig. 4

Fig. 6

Fig. 7

Fig.8

Fig. 9

Fig. 10

EP 1 169 588 B1

Fig.11

Fig. 12

65   K₁   KA   32   K₂
62   44
46
67   α
61
DA
38

EP 1 169 588 B1

Fig. 13

Fig. 14

Fig.15

EP 1 169 588 B1

Fig.16

# Fig. 17

Fig.18

Fig.19

$\overline{MU} = R$

R = Kreisradius

Fig.20

Fig.21

Aktion

Reaktion

Reaktion

Aktion

Fig. 22

Fig. 23

Fig. 24

Fig. 25

Fig. 26

# Fig. 27